(19) **Europäisches Patentamt / European Patent Office / Office européen des brevets**

(11) **EP 3 509 738 B1**

(12) **FASCICULE DE BREVET EUROPEEN**

(45) Date de publication et mention de la délivrance du brevet:
**26.07.2023   Bulletin 2023/30**

(21) Numéro de dépôt: **17768847.0**

(22) Date de dépôt: **06.09.2017**

(51) Classification Internationale des Brevets (IPC):
**B01J 20/04** (2006.01)     **B01J 20/28** (2006.01)
**B01J 20/32** (2006.01)     **C02F 1/28** (2023.01)
**C01C 3/08** (2006.01)      **C01C 3/12** (2006.01)
**G21F 9/12** (2006.01)      **C02F 101/00** (2006.01)
**C02F 101/20** (2006.01)    **C02F 103/08** (2006.01)

(52) Classification Coopérative des Brevets (CPC):
**G21F 9/12; B01J 20/04; B01J 20/28004; B01J 20/28007; B01J 20/28057; B01J 20/3204; B01J 20/3236; B01J 20/3295; C01C 3/08; C01C 3/12; C02F 1/288;** C02F 2101/006; C02F 2101/20; C02F 2103/08; C02F 2305/08

(86) Numéro de dépôt international:
**PCT/FR2017/052356**

(87) Numéro de publication internationale:
**WO 2018/046844 (15.03.2018 Gazette 2018/11)**

(54) **PROCÉDÉ DE PRÉPARATION D'UN MATÉRIAU SOLIDE NANOCOMPOSITE A BASE D'HEXA- OU OCTACYANOMÉTALLATES DE MÉTAUX ALCALINS**

VERFAHREN ZUR HERSTELLUNG EINES FESTEN NANOKOMPOSITMATERIALS AUS HEXA- ODER OCTACYANOMETALLATEN VON ALKALIMETALLEN

PROCESS FOR PREPARING A SOLID NANOCOMPOSITE MATERIAL MADE FROM HEXA- OR OCTACYANOMETALLATES OF ALKALI METALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2016   FR 1658369**

(43) Date de publication de la demande:
**17.07.2019   Bulletin 2019/29**

(73) Titulaires:
• **Commissariat à l'énergie atomique et aux énergies alternatives**
  **75015 Paris (FR)**
• **Orano Recyclage**
  **92320 Châtillon (FR)**

(72) Inventeurs:
• **GRANDJEAN, Agnès**
  **30330 Saint-Marcel-De-Careiret (FR)**
• **FREMY, Virginie**
  **30290 Saint-Victor-La-Coste (FR)**
• **CHARLOT, Alexandre**
  **38470 Beaulieu (FR)**
• **BARRE, Yves**
  **84100 Uchaux (FR)**

(74) Mandataire: **Brevalex**
  **56, Boulevard de l'Embouchure**
  **B.P. 27519**
  **31075 Toulouse Cedex 2 (FR)**

(56) Documents cités:
  **WO-A1-2016/038206**

• **KAZEMIAN H ET AL: "Cs and Sr removal from solution using potassium nickel hexacyanoferrate impregnated zeolites", JOURNAL OF RADIOANALYTICAL AND NUCLEAR CHEMISTRY, KLUWER ACADEMIC PUBLISHERS, DO, vol. 268, no. 2, mai 2006 (2006-05), pages 231-236, XP019402214, ISSN: 1588-2780, DOI: 10.1007/S10967-006-0158-X**

**(Cont. page suivante)**

- **THIERRY VINCENT ET AL: "Immobilization of Metal Hexacyanoferrate Ion-Exchangers for the Synthesis of Metal Ion Sorbents - A Mini-Review", MOLECULES ONLINE, vol. 20, no. 11, 19 décembre 2015 (2015-12-19), pages 20582-20613, XP055382362, DE ISSN: 1433-1373, DOI: 10.3390/molecules201119718**
- **H. Kazemian ET AL: "Iranian natural clinoptilolite and its synthetic zeolite P for removal of cerium and thorium from nuclear wastewaters", Journal of Radioanalytical and Nuclear Chemistry, vol. 258, no. 3, 1 December 2003 (2003-12-01), pages 551-556, XP055678575, HU ISSN: 0236-5731, DOI: 10.1023/B:JRNC.0000011751.35443.b3**
- **Anonymous: "Brønsted-Lowry acid-base theory", Wikipedia, 15 December 2021 (2021-12-15), pages 1-5, XP055883918, Retrieved from the Internet: URL:https://en.wikipedia.org/wiki/Br%C3%B8 nsted%E2%80%93Lowry_acid%E2%80%93base _theo ry [retrieved on 2022-01-26]**

**Description**

**DOMAINE TECHNIQUE**

L'invention concerne un procédé de préparation d'un matériau solide nanocomposite à base d'hexa- ou octacyanométallates de métaux alcalins.

Ces hexa- et octacyanométallates de métaux alcalins peuvent être appelés Analogues de Bleu de Prusse ou ABP.

Plus précisément, l'invention a trait à un procédé de préparation d'un matériau solide nanocomposite comprenant des nanoparticules comprenant des cations métalliques, des cations alcalins, et des anions hexa- ou octacyanométallates, notamment des anions hexa- ou octacyanoferrates, lesdites nanoparticules étant adsorbées sur au moins une surface d'un support solide.

La matériau solide nanocomposite à base d'hexa- ou octacyanométallates de métaux alcalins préparé par le procédé selon l'invention ne comporte pas de ligand organique et peut donc être considéré comme un matériau purement inorganique ou inorganique-inorganique.

Le procédé selon l'invention peut être défini comme un procédé de fonctionnalisation d'un support solide par des nanoparticules d'Analogues de Bleu de Prusse ABP.

Le matériau préparé par le procédé selon l'invention peut être utilisé dans un procédé de séparation de cations métalliques, notamment de cations métalliques radioactifs, contenus dans un liquide, tel qu'une solution, notamment une solution aqueuse, mettant en oeuvre ledit matériau.

Par exemple, le matériau préparé par le procédé selon l'invention peut être utilisé pour l'adsorption, extraction sélective du césium radioactif contenu dans une solution aqueuse.

Le domaine technique de l'invention peut de manière générale être défini comme celui des fixateurs minéraux.

**ÉTAT DE LA TECHNIQUE ANTÉRIEURE**

Les installations nucléaires telles que les réacteurs de puissance, les usines de retraitement du combustible nucléaire usé, les laboratoires, les centres de recherche et les stations de traitement des effluents liquides, génèrent des effluents radioactifs, notamment des effluents radioactifs liquides.

En particulier, les différentes opérations qui interviennent dans le cycle du combustible nucléaire, depuis la mine jusqu'au démantèlement des installations en fin de vie, génèrent des effluents radioactifs, notamment des effluents radioactifs liquides.

Ces effluents, dont les volumes sont considérables, doivent être traités et décontaminés avant leur rejet dans l'environnement.

Les polluants que contiennent ces effluents et qui doivent donc être éliminés, sont principalement des particules solides et/ou des radioéléments essentiellement présents sous la forme de cations métalliques en solution.

L'extraction, fixation sélective des radioéléments présents dans ces effluents liquides est actuellement généralement réalisée avec des résines échangeuses d'ions organiques.

De telles résines présentent au moins deux inconvénients. D'une part, leur sélectivité est relativement faible, et d'autre part, à cause du caractère irradiant des radioéléments extraits, ces derniers peuvent dans certains cas entraîner une détérioration des résines en conditions d'entreposage ou de stockage, qui sous l'effet de la radiolyse, sont susceptibles de libérer de l'hydrogène.

C'est notamment pour remédier aux défauts des résines échangeuses d'ions organiques qu'ont été développés les fixateurs minéraux puis les fixateurs composites, en particulier à base d'analogues du Bleu de Prusse.

Ainsi, pour le traitement d'effluents contenant du césium ou des métaux de transition radioactifs tels que $^{60}$Co, de nombreux matériaux à base d'Analogues de Bleu de Prusse ont été proposés dans la littérature et sont disponibles dans le commerce.

On pourra à cet égard se reporter à l'état de la technique antérieure exposé dans le document WO-A2-2010/133689 [1].

Dans ce document, il est précisé que les matériaux composites à support inorganique, minéral, peuvent être préparés par synthèse par coprécipitation au sein du support, par synthèse par voie sol-gel, par synthèse directe au sein d'un support inorganique poreux, ou par d'autres voies.

Parmi les documents mentionnés dans le document [1], on peut notamment citer le document de Mimura et al. [2] qui propose un procédé de synthèse dans lequel des nanoparticules d'ABP sont insérées par voie directe sur un support inorganique. Le matériau obtenu est utilisé pour la décontamination en Cs au moyen d'un procédé en colonne.

Le procédé de synthèse comprend l'imprégnation successive d'un gel de silice poreux avec des solutions de $Ni(NO_3)_2$ puis de $K_4Fe(CN)_6$.

D'une part, du fait de la non-préparation préalable du support, la quantité de nanoparticules au sein du matériau est faible. D'autre part, du fait que la seconde imprégnation se fait en l'absence d'un sel de potassium, les nanoparticules ne contiennent que très peu de potassium dans leur structure entraînant à la fois une moindre sélectivité (avec un Kd de l'ordre de $10^4$ ml/g), un relargage de métal de transition lors de l'extraction du Cs, ainsi qu'une cinétique lente : il faut en effet 2 jours pour atteindre l'équilibre.

Avec ce type de synthèse par coprécipitation au sein du support, la composition du produit final est mal contrôlée et ses propriétés sont peu reproductibles. En effet, la quantité d'hexacyanoferrate déposée est très mal maîtrisée par la coprécipitation et le fixateur hexacyanoferrate est faiblement lié au support. Le fixateur peut donc être facilement détaché au cours de l'étape de décontamination. Cette synthèse met également en oeuvre systématiquement une grande quantité d'hexacyanoferrate, ce qui est gênant pour le traitement et le conditionnement des déchets ainsi générés.

Un autre exemple de ce type de matériaux inorganique-inorganique hybrides a été proposé dans le document [3], puis commercialisé.

Dans ce document [3], la description du procédé de synthèse est succincte, mais les matériaux obtenus correspondent à un hydroxyde de zirconium dense élaboré en présence de nickel-hexacyanoferrate de potassium non stoechiométrique.

L'absence de porosité de ces matériaux conduit à une cinétique d'échange extrêmement lente (avec un équilibre atteint après plusieurs jours), ce qui est problématique pour un procédé en lit fixe. D'autre part, la nature chimique des particules n'étant pas stoechiométrique, il y a un relargage de nickel lors de l'extraction du Cs. Enfin, le procédé de synthèse de ce document n'est pas transposable à d'autres supports, comme par exemple des grains de différentes tailles ou des membranes de filtration par exemple.

Plus exactement, il semble qu'il s'agisse, dans ce document [3], de synthétiser directement le nickel-hexacyanoferrate de potassium au sein d'un gel d'hydroxyde de zirconium. Selon les auteurs de cet article, l'hydroxyde de zirconium a été choisi pour des applications à des solutions basiques, à savoir avec un pH supérieur à 12. Le matériau obtenu, dénommé « Thermoxid-35 » se présente sous la forme de granulés de 0,4 à 1 mm de diamètre, contenant de l'ordre de 33% en masse de ZrOz, 38% en masse d'eau et 28% en masse de nickel-hexacyanoferrate de potassium.

Ce matériau présente une porosité dont le volume de pores est de l'ordre de 0,35 à 0,4 $cm^3$/g pour une taille de pores de l'ordre de 6 nm. Ce composite a été testé pour l'adsorption du Cs à des concentrations allant de 0,01 à 2,0 mmol/L dans une solution dont le pH variait entre 6,2 et 9,6 et en présence de 1 mol/L de NaCl. Dans tous les cas, des Kd supérieurs à 1,0 $10^4$ $cm^3$/g sont obtenus.

Comme la synthèse par coprécipitation classique, l'élaboration de composites par coprécipitation *in situ* par voie sol-gel utilise également une grande quantité d'hexacyanoferrate, qui peut atteindre jusqu'à 30%, mais aussi une quantité non négligeable d'eau. Ceci peut poser des problèmes pour le traitement et le conditionnement des déchets ainsi générés. En effet, ces fortes quantités d'eau peuvent entraîner la libération d'hydrogène par radiolyse au cours du stockage.

De plus, des tests au laboratoire ont montré que la cinétique de sorption sur le « Thermoxid » était très lente car il faut environ 300 heures pour atteindre l'équilibre.

Enfin, la vitrification éventuelle de ces composés riches en hexacyanoferrate peut entraîner un dégagement d'acide cyanhydrique toxique et qui pourrait favoriser la volatilisation du césium ainsi fixé, rendant alors la décontamination inopérante.

Plus récemment, Chaudhury et al. ont proposé dans le document [4] un procédé d'imprégnation simple pour la fonctionnalisation de membranes par des Analogues de Bleu de Prusse, en l'occurrence un ferrocyanure de cuivre.

Pour ce faire, ils exposent les membranes à deux compartiments de perméation disjoints, l'un contenant une solution aqueuse de $CuSO_4$, et l'autre contenant une solution aqueuse de $K_4Fe(CN_6)$. Lors de la traversée de la membrane par ces solutions, il se produit une précipitation rapide d'un ferrocyanure de cuivre non stoechiométrique au sein de la porosité de la membrane. Cette voie de synthèse simple et ne faisant intervenir ni ligands ni solvants organiques, permet d'atteindre des Kd élevés (de l'ordre de $10^5$ ml/g), mais ne permet pas d'obtenir un ferrocyanure avec des ions potassium dans la structure et donc conduit à une cinétique relativement lente (quelques heures pour atteindre l'équilibre). De plus, l'absence de stoechiométrie dans la structure du ferrocyanure conduit très vraisemblablement au relargage de Cu en solution. Enfin, cette voie n'est applicable qu'à des membranes et non à des grains pouvant être utilisés dans un procédé de traitement en lit fixe.

Le document WO-A1-2010/133689 [1], déjà cité, avait donc pour but de surmonter les inconvénients des matériaux décrits dans les documents [2], [3], et [4].

Ce document décrit en effet un matériau solide contenant des nanoparticules d'ABP et son procédé de préparation.

Plus précisément, le document WO-A1-2010/133689 [1] décrit un matériau solide nanocomposite comprenant des nanoparticules d'un polymère de coordination métallique à ligands CN comprenant des cations $M^{n+}$, où M est un métal de transition, et n est 2 ou 3 ; et des anions $[M'(CN)_m]^{x-}$, où M' est un métal de transition, x est 3 ou 4, et m est 6 ou 8 ; lesdits cations $M^{n+}$ du polymère de coordination étant liés par une liaison organométallique à un groupe organique d'un greffon organique fixé chimiquement à l'intérieur des pores d'un support en verre poreux.

Le document WO-A1-2010/133689 [1] a également trait à un procédé de préparation dudit matériau solide nanocomposite, dans lequel on réalise les étapes successives suivantes :

a) on prépare un support en verre poreux ;
b) on réalise la fixation chimique du greffon organique à l'intérieur des pores du support en verre poreux ;
c) on met en contact le support en verre poreux à l'intérieur des pores duquel est fixé le greffon organique avec une solution contenant l'ion $M^{n+}$, puis on lave une ou plusieurs fois et on sèche le support ainsi obtenu ;
d) on met en contact le support en verre poreux obtenu à l'issue de l'étape c) avec une solution d'un complexe de $[M'(CN)_m]^{x-}$, puis on lave une ou plusieurs fois et on sèche le support ainsi obtenu ;
e) on lave une ou plusieurs fois le support en verre poreux obtenu à l'issue de l'étape d), puis on le sèche ;
f) on répète éventuellement les étapes c) à e).

Le matériau solide nanocomposite de ce document et son procédé de préparation présentent de nombreux inconvénients.

Le support du matériau solide nanocomposite de ce document est limité à un support en verre poreux, plus exactement à un support en verre poreux très spécifique préparé par attaque chimique sélective de la phase boratée d'un verre de borosilicate de sodium massif dont la composition se situe dans la zone de démixtion du diagramme de phase $SiO_2$-$Na_2O$-$B_2O_3$.

Le procédé de préparation décrit dans ce document ne permet que la préparation d'un matériau spécifique comportant un support très spécifique, et ne peut en aucun cas être transposé à la préparation de matériaux comprenant d'autres supports.

De plus, dans ce document, du fait du procédé utilisé pour la préparation du matériau, les nanoparticules d'hexacyanométallates, par exemple, d'hexacyanoferrates liés au support ne contiennent pas d'ions alcalins au sein de leur structure.

Or il a été montré, et cela est bien connu de l'homme du métier, que les hexacyanoferrates contenant un métal alcalin dans leur structure avaient non seulement de meilleures capacités d'extraction, par exemple du Cs, mais également qu'il n'y avait alors pas de relargage du métal de transition qui rentre dans la structure de l'hexacyanoferrate.

En effet, dans le cas des hexacyanoferrates contenant un métal alcalin, l'adsorption du Cs se fait par échange ionique avec le métal alcalin, tel que le potassium, alors que dans le cas de l'utilisation d'hexacyanoferrates sans métal alcalin, l'adsorption du Cs se fait en partie par un échange ionique avec le métal de transition présent dans la structure de l'hexacyanoferrate, ce qui conduit donc à un relargage du métal de transition.

Pour des questions de norme de rejet, il est bien préférable d'avoir un relargage de métal alcalin, tel que le potassium, plutôt qu'un relargage d'un métal de transition tel que le Co ou le Ni.

Enfin, le procédé de synthèse décrit dans le document WO-A1-2010/133689 [1] est relativement complexe, et nécessite généralement l'utilisation de solvants organiques, tels que le méthanol, et d'une atmosphère contrôlée.

Ce procédé de synthèse peut donc difficilement être mis en oeuvre à une échelle industrielle.

Le document WO-A1-2016/038206 [5] a pour but de surmonter les inconvénients du procédé du document [1].

Il propose pour cela un procédé de préparation d'un matériau solide nanocomposite comprenant des nanoparticules d'ABP contenant un alcalin dans les cages de la structure, agissant comme un pur échangeur ionique entre l'alcalin de la structure et l'ion à extraire.

En d'autres termes, les nanoparticules d'ABP contiennent un cation de métal alcalin dans leur structure qui s'échange avec le cation à extraire présent en solution.

Plus précisément, le document [5] a trait à un procédé de préparation d'un matériau solide nanocomposite comprenant des nanoparticules d'un polymère de coordination métallique à ligands CN, lesdites nanoparticules répondant à la formule $[Alk^+_x]M^{n+} [M'(CN)_m]^{z-}$ où Alk est un métal alcalin, x est 1 ou 2, M est un métal de transition, n est 2 ou 3, M' est un métal de transition, m est 6 ou 8, z est 3 ou 4 ; lesdits cations $M^{n+}$ du polymère de coordination étant liés par une liaison organométallique ou de coordination à un groupe organique R2 d'un greffon organique, et ledit greffon organique étant en outre fixé chimiquement, de préférence par une liaison covalente, à au moins une surface d'un support solide par réaction d'un groupe R1 dudit greffon avec ladite surface; procédé dans lequel on réalise les étapes successives suivantes :

a) on fournit un support solide;
b) on réalise la fixation chimique du greffon organique à la surface du support solide ;
c) on met en contact le support solide à la surface duquel est fixé le greffon organique avec une solution contenant l'ion $M^{n+}$, puis on lave une ou plusieurs fois et on sèche éventuellement le support solide greffé ainsi obtenu ;
d) on met en contact le support solide greffé obtenu à l'issue de l'étape c) avec une solution contenant un complexe ou sel de $[M'(CN)_m]^{z-}$, par exemple un sel de formule $[Alk_z] [M'(CN)_m]$, et un sel d'un métal alcalin Alk, puis on lave une ou plusieurs fois, et on sèche éventuellement le support solide ainsi obtenu;

e) on répète éventuellement les étapes c) à d).

f) Si les étapes c) et d) sont les étapes ultimes du procédé, alors lors de l'étape c) on lave une ou plusieurs fois et on sèche le support solide greffé obtenu, et lors de l'étape d) on lave une ou plusieurs fois et on sèche le support solide ainsi obtenu.

On note donc que, dans le matériau obtenu par le procédé de ce document, les nanoparticules « échangeurs cationiques » du polymère de coordination métallique à ligands CN sont liées au support par l'intermédiaire d'un greffon organique.

La présence de ce greffon organique entre les nanoparticules « échangeurs cationiques » et le support implique une étape de synthèse réalisée à température élevée faisant intervenir d'une part, un solvant organique et d'autre part, des espèces organiques (c'est-à-dire le greffon). L'utilisation d'un solvant organique dans le cadre d'une fabrication à une échelle industrielle est de plus en plus proscrite pour des soucis de diminution de l'empreinte environnementale et de sécurité lors de la fabrication (risque « *ATEX* »).

L'utilisation d'un greffon organique spécifique induit également une augmentation du coût de fabrication, ce qui la rend difficilement rentable.

Enfin, la présence de greffons organiques reste néanmoins un point délicat lors du choix de la filière de gestion du déchet final contenant le cation, en particulier le cation de radionucléide (RN) cible.

En effet, la présence de composés organiques dans ces déchets peut entraîner la production de gaz de radiolyse, comme l'hydrogène, et donc une gestion plus délicate du déchet en condition d'entreposage ou de stockage.

Le document [6] décrit la préparation de clinoptilonite et de zéolithe P chargées en potassium Nickel Hexacyanoferrate pour la séparation du Cs et du Sr à partir de soutions.

La zéolithe P est synthétisée par voie hydrothermale en faisant réagir une poudre de clinoptilonite naturelle avec une solution d'hydroxyde de sodium 3N en grand excès à 100°C pendant 2 jours. Cett synthèse est donc longue, et consommatrice d'énergie et de réactifs.

Il existe donc, au regard de ce qui précède, un besoin pour un procédé de préparation d'un matériau solide nanocomposite comprenant des nanoparticules d'un hexacyanométallate ou octacyanométallate d'un métal alcalin et d'un métal de transition qui ne présente pas les inconvénients, limitations et défauts des procédé de préparation des matériaux de l'art antérieur, tel que représenté notamment par les documents [1], [2], [3], [4] et [5], et plus particulièrement par le document [5] et qui résolve les problèmes posés par les procédés de préparation desmatériaux de ces documents, évoqués plus haut.

En particulier, il existe un besoin pour un tel procédé de préparation d'un matériau, qui ne contienne pas de greffon, ligand afin de résoudre le problème de la gestion du déchet final obtenu après utilisation du matériau pour séparer un polluant tel qu'un cation radioactif, et également afin de réduire le coût de fabrication.

Le matériau préparé par ce procédé doit présenter une cinétique d'extraction rapide, à savoir de quelques minutes pour atteindre l'équilibre, pour permettre une utilisation optimale en lit fixe.

La quantité de nanoparticules au sein dudit matériau doit être élevée.

Les nanoparticules doivent être des nanoparticules d'ABP contenant un cation alcalin dans les cages de la structure afin d'agir comme un pur échangeur ionique entre le cation alcalin de la structure et un cation à extraire. La réaction d'échange entre le matériau et le polluant doit faire intervenir uniquement le cation alcalin, sans impact sur les autres métaux constitutifs de la structure des nanoparticules.

Il existe donc un besoin pour un procédé permettant de préparer un matériau possédant les propriétés mentionnées ci-dessus et répondant aux exigences énumérées plus haut.

Ce procédé doit satisfaire, en outre, également aux exigences suivantes :

- il doit pouvoir être mis en oeuvre avec toutes sortes de supports quelles que soient leur composition et leur forme ;
- il doit mettre en oeuvre, de préférence, des étapes, notamment des étapes de synthèse, n'utilisant pas de solvants organiques, ni d'atmosphères contrôlées afin de limiter l'empreinte environnementale, de diminuer les risques inhérents à une fabrication industrielle et de réduire autant que possible les coûts de fabrication ;
- il doit être simple, fiable, reproductible, comporter un nombre limité d'étapes.
- il doit comporter des étapes de synthèse courtes afin de diminuer le temps et donc le coût de fabrication.

Le but de l'invention est de fournir un tel procédé qui réponde entre autres à ces besoins et à ces exigences.

## EXPOSÉ DE L'INVENTION

Ce but, et d'autres encore, sont atteints conformément à l'invention, par un procédé de préparation d'un matériau solide nanocomposite comprenant des nanoparticules d'un hexacyanométallate ou octacyanométallate d'un métal alcalin et d'un métal de transition, répondant à la formule $[Alk^+_x]M^{n+} [M'(CN)_m]^{z-}$ où Alk est un métal alcalin, x est 1 ou 2, M est un métal de transition, n est 2 ou 3, M' est un métal de transition, m est 6 ou 8, z est 3 ou 4, fixées à au moins une surface d'un support solide inorganique poreux, dans lequel les nanoparticules sont fixées par adsorption à ladite au moins une surface du support solide ; ledit procédé étant tel que défini dans la revendication 1.

Le support solide inorganique est poreux, comprend des pores, définis par des parois, et les nanoparticules sont fixées par adsorption à une surface interne basique desdites parois.

Par « fixé à l'intérieur des pores », on entend alors généralement « fixé à la surface interne des parois des canaux définissant lesdits pores ».

Par « au moins une surface basique », on entend que la majorité et de préférence toutes les surfaces accessibles (à une solution basique) du support sont basiques, ou plutôt ont été rendues basiques, y compris la surface interne des parois des canaux définissant les pores.

Pour déterminer si ladite surface est basique (a été rendue basique), on peut simplement mettre en contact la surface du support solide inorganique avec un indicateur coloré adéquat, notamment un indicateur coloré, spécifique de la gamme de pH basique (qui possède donc une couleur déterminée, spécifique ou des couleurs déterminées, spécifiques, dans la gamme de pH basique), tel que la Phénolphtaléine, puis observer, par exemple visuellement, la couleur de la surface obtenue suite à cette mise en contact.

Rappelons que la Phénolphtaléine a une couleur rose dans une gamme de pH de 9 à 10, et une couleur violette pour un pH supérieur à 10.

Si la couleur de la surface obtenue suite à la mise en contact avec l'indicateur coloré est la couleur déterminée, spécifique, ou une des couleurs déterminées spécifiques que possède l'indicateur dans une gamme de pH basique, alors on pourra considérer que la surface du support solide inorganique est effectivement, réellement basique, a été effectivement, réellement rendue basique.

Il est également possible en utilisant un indicateur ou des indicateurs colorés adéquats de déterminer dans quelle plage de pH basique spécifique se situe le pH de la surface du support solide inorganique. Cela est notamment intéressant si l'on souhaite que la surface du support solide soit basique avec une basicité spécifique se situant dans une plage de pH déterminée, spécifique.

Ainsi, si l'on souhaite que la surface du support solide inorganique soit basique avec un pH de 9 à 10, on traitera cette surface avec une solution basique de telle sorte que lors de la mise en contact de cette surface avec la Phénolphtaléine, cette surface possède une couleur rose (plutôt rose clair au voisinage de pH 9 et plutôt rose foncé au voisinage de pH 10) et si l'on souhaite que la surface du support solide inorganique soit basique avec un pH supérieur à 10, on traitera cette surface avec une solution basique de telle sorte que lors de la mise en contact de cette surface avec la Phénolphtaléine, cette surface possède une couleur violette , d'autant plus foncée, soutenue, que le pH est élevé.

Selon l'invention, la surface du support solide est rendue basique en mettant en contact cette surface avec au moins une solution basique, de préférence au moins une solution aqueuse basique, sous agitation, jusqu'à ce que le pH de cette solution basique en contact avec la surface, soit stabilisé à une valeur de pH déterminée, voulue, et demeure stable, à une valeur basique, supérieure à 7.

Cette mise en contact peut être réalisée en une opération, en une fois, ou en plusieurs fois, en plusieurs opérations successives de mise en contact, les solutions basiques utilisées lors de ces mises en contact successives ayant le même pH ou des pH différents, par exemple des pH croissants.

La mise en contact est réalisée à la température ambiante (à savoir 15°C à 30°C, de préférence 20°C à 25°C), sans chauffage, et à la pression atmosphérique, sans appliquer de pression.

Par pH stable, on entend que la valeur du pH reste stable pendant une durée de 10 minutes.

Cette solution basique est généralement une solution aqueuse basique d'une base minérale, de préférence une solution aqueuse basique de NaOH ou de KOH, de préférence encore de KOH, à un pH supérieur à 7, de préférence supérieur ou égal à 9, de préférence supérieur ou égal à 10, par exemple cette solution aqueuse basique par exemple de KOH, peut avoir un pH de 9, 10, ou 14. Notamment la solution aqueuse basique peut être une solution aqueuse basique de KOH et le support peut être alors de préférence en silice.

La surface basique (rendue basique) du support inorganique, minéral, poreux reste une surface inorganique, minérale. Mis à part le fait que cette surface devient basique du fait d'une réaction qui se produit en surface entre la solution basique et le matériau inorganique du support, (par exemple entre la base minérale tel que KOH et ce matériau inorganique, notamment entre KOH et la silice), elle ne subit pas d'autre modification fondamentale de sa composition, et la configuration, la forme, la géométrie, de cette surface n'est pas modifiée.

Selon le procédé de l'invention, la surface du support inorganique n'est pas rendue basique par greffage d'une molécule, greffon, notamment organique à la surface du support. La surface rendue basique demeure inorganique, elle n'est pas fondamentalement modifiée par le fait qu'elle est rendue basique, elle ne comporte pas de molécules, greffons organiques ou autres éléments ajoutés suite au traitement la rendant basique.

En d'autres termes, la basicité de la surface du support inorganique est une basicité intrinsèque au matériau inorganique minéral, tel que la silice, constituant le support, suite notamment à sa mise en contact avec une solution aqueuse basique, telle qu'une solution de KOH, et non une basicité due à des éléments, molécules, notamment organiques qui seraient fixées, greffées à ce matériau inorganique.

Avantageusement, les nanoparticules sont réparties de manière uniforme, homogène dans les pores.

Dans la formule donnée plus haut, Alk$^+$ représente donc un cation monovalent d'un métal alcalin tel que Li, Na ou K, K étant préféré.

La formule donnée ci-dessus peut être écrite de manière simplifiée : $[Alk_x]M[M'(CN)_m]$ où M est au degré d'oxydation 2 ou 3 et Alk est au degré d'oxydation 1.

Lesdites nanoparticules peuvent aussi être appelées éventuellement « nanocristaux ».

Le matériau préparé par le procédé selon l'invention comprend une combinaison de caractéristiques..

Selon une première caractéristique, les nanoparticules du matériau préparé par le procédé selon l'invention sont des nanoparticules d'un composé spécifique, qui est un composé stoechiométrique $[Alk^+_x]M^{n+}[M'(CN)_m]^{z-}$, alors que -et cela est unanimement confirmé par la littérature- un composé non stoechiométrique, par exemple de formule $Alk_xM_{1-x}[M^{II}M'^{III}(CN)_6]$ ; $Alk_xM_{1-x}[M^{III}M'^{II}(CN)_6]$ ; $Alk_{2x}M_{1-x}[M^{II}M'^{II}(CN)_6]$ ; $Alk_xM_{1-x}[M^{II}M''^V(CN)_8]$, avec x strictement inférieur à 1, est obtenu lorsque cette synthèse est réalisée sans addition supplémentaire d'un sel de métal alcalin tel qu'un sel de potassium comme dans le procédé selon l'invention.

Le matériau préparé par le procédé selon l'invention contenant un métal alcalin dans sa structure a de meilleures capacités d'extraction, par exemple du Cs.

En outre, dans le matériau préparé par le procédé selon l'invention, l'échange ionique lors de l'extraction, par exemple du césium, se produit uniquement avec le métal alcalin, tel que le potassium, et il n'y a pas de relargage du métal M ou M' qui rentre dans la structure de l'hexacyanoferrate. Il est bien plus avantageux, notamment du point de vue du respect des normes de rejet, de relarguer un métal alcalin tel que le potassium, plutôt qu'un métal de transition.

Autrement dit, le matériau préparé par le procédé selon l'invention présente au sein de sa porosité des nanoparticules d'ABP qui contiennent un cation de métal alcalin dans les cages de leur structure. De ce fait, cet ABP agit comme un pur échangeur ionique entre le cation de métal alcalin de la structure et le cation polluant à extraire, tel qu'un cation césium. La réaction d'échange entre le matériau et le cation polluant fait intervenir uniquement le cation de métal alcalin, sans impact sur les autres métaux constitutifs de la structure des nanoparticules.

Selon une deuxième caractéristique, le matériau préparé par le procédé selon l'invention comprend un support solide dont la surface est basique, a été rendue basique, alors que dans les matériaux de l'art antérieur, tels que les matériaux préparés par les procédés décrits dans les documents [2], [3], et [4], le support ne subit aucune préparation préalable à la fixation des nanoparticules, en particulier le support n'est pas basique.

C'est ce caractère basique de la surface du support qui permet, de manière surprenante, qu'une quantité importante de nanoparticules soit fixée au support. Dans les matériaux des documents [2], [3], et [4] dont le support inorganique n'a subi aucune préparation préalable, et notamment n'est pas basique, la quantité de nanoparticules fixée au support est faible.

En d'autres termes, un prétraitement à pH basique selon le procédé de l'inventionpermet d'incorporer une quantité plus importante de nanoparticules dans le support poreux. La taille des nanoparticules est fixée par le diamètre des pores, et les nanoparticules sont donc bloquées dans les pores. La fixation des nanoparticules est mécanique.

Selon donc une troisième caractéristique du matériau préparé par le procédé selon l'invention, les nanoparticules sont fixées par adsorption à l'intérieur des pores du support solide inorganique poreux.

Dans le matériau préparé par le procédé selon l'invention, les nanoparticules ne sont donc pas fixées au support inorganique par l'intermédiaire d'un ligand, greffon, organique.

Il s'agit là de la différence essentielle entre le matériau préparé par le procédé selon l'invention et le matériau préparé par le procédé du document [5]. Les inconvénients dus, dans le procédé du document [5], à la présence de ce greffon organique sont donc éliminés.

Ainsi, l'absence d'un greffon, ligand organique dans le matériau préparé par le procédé selon l'invention permet notamment de résoudre les problèmes de gestion du déchet final (comprenant un radio-isotope) et de réduire le coût de fabrication.

On peut dire que le matériau préparé par le procédé selon l'invention présente tous les avantages du matériau préparé par le procédé du document [5] sans en présenter les inconvénients dus notamment à la présence d'un greffon.

Bien qu'elles ne soient pas liées au support inorganique par l'intermédiaire d'un ligand organique, les nanoparticules sont cependant fixées solidement au support et la teneur en nanoparticules du matériau préparé par le procédé selon l'invention est élevée et comparable à celle du matériau préparé par le procédé du document [5].

Comme on le verra plus loin, l'absence de greffon organique simplifie également grandement le procédé de fabrication du matériau selon l'invention par rapport notamment au procédé du document [5].

Avantageusement, la teneur en nanoparticules du matériau préparé par le procédé selon l'invention est de 1% à 20% en masse, de préférence de l'ordre de 10% en masse par rapport à la masse du support solide.

Une autre propriété du matériau préparé par le procédé selon l'invention est qu'il présente une cinétique d'extraction rapide, avec une durée de seulement quelques minutes, par exemple de 5 à 10 min pour atteindre l'équilibre. Cela permet une utilisation optimale du matériau en lit fixe.

Finalement, le matériau préparé par le procédé selon l'invention répond à l'ensemble des besoins et exigences mentionnées plus haut.

Dans la formule donnée plus haut, Alk peut être Li, Na ou K, de préférence Alk est K.

Avantageusement, $M^{n+}$ peut être $Fe^{2+}$, $Ni^{2+}$, $Fe^{3+}$, $Co^{2+}$, $Cu^{2+}$, ou $Zn^{2+}$.

Avantageusement, M' peut être $Fe^{2+}$ ou $Fe^{3+}$ ou $Co^{3+}$, et m est 6.

Avantageusement, M' peut être $Mo^{5+}$, et m est 8.

Avantageusement, $[M'(CN)_m]^{z-}$ peut être $[Fe(CN)_6]^{3-}$, $[Fe(CN)_6]^{4-}$, $[Co(CN)_6]^{3-}$, ou $[Mo(CN)_8]^{3-}$.

Avantageusement, les cations $M^{n+}$ peuvent être des cations $Ni^{2+}$, $Cu^{2+}$, $Fe^{2+}$ ou $Fe^{3+}$ et les anions $[M'(CN)_m]^{z-}$ peuvent être des anions $[Fe(CN)_6]^{3-}$ ou $[Fe(CN)_6]^{4-}$.

Avantageusement, les cations $M^{n+}$ peuvent être des cations $Fe^{3+}$ et les anions $[M'(CN)_m]^{z-}$ peuvent être des anions $[Mo(CN)_8]^{3-}$.

Avantageusement, les cations $M^{n+}$ peuvent être des cations $Co^{2+}$ ou $Ni^{2+}$ et les anions $[M'(CN)_m]^{z-}$ peuvent être des anions $[Co(CN)_6]^{3-}$.

De préférence, les nanoparticules répondent à la formule $K[Cu^{II}Fe^{III}(CN)_6]$, ou $K_2[Cu^{II}Fe^{II}(CN)_6]$, ou $K[Ni^{II}Fe^{III}(CN)_6]$ ou $K_2[Ni^{II}Fe^{II}(CN)_6]$.

Avantageusement, les nanoparticules peuvent avoir une forme de sphère ou de sphéroïde.

Les nanoparticules ont généralement une taille, telle qu'un diamètre, de 3 nm à 30 nm.

Il est à noter que les nanoparticules ont généralement une taille et une forme uniformes dans tout le support.

Avantageusement, le support comprend, de préférence est constitué par, un matériau choisi parmi les oxydes de métaux, tels que les oxydes de métaux de transition, comme les oxydes de titane, les oxydes de zirconium par exemple la zircone, les oxydes de niobium, les oxydes de vanadium, les oxydes de chrome, les oxydes de cobalt et les oxydes de molybdène, les oxydes d'aluminium, par exemple l'alumine, les oxydes de gallium, et leurs mélanges ; les oxydes de métalloïdes tels que les oxydes de silicium, par exemple la silice, les oxydes de germanium, les oxydes d'antimoine, et les oxydes d'arsenic, et leurs mélanges; les oxydes mixtes de métaux et/ou de métalloïdes; les aluminosilicates de métaux ; les silicates de métaux tels que les silicates de zirconium, les silicates d'étain, les silicates de cérium, les composés de type mullite (silicate d'aluminium) et cordiérite (silicate alumineux ferromagnésien), et leurs mélanges; les titanates de métaux tels que la tialite, les titanates de métalloïdes, et leurs mélanges; les carbures de métaux; les carbures de métalloïdes tels que SiC, et leurs mélanges ; les mélanges d'oxydes de métaux et/ou d'oxydes de métalloïdes et/ou d'oxydes mixtes de métaux et/ou de métalloïdes ; les verres comme les verres borosilicatés; les carbones (inorganiques) comme les graphites, les fullerènes, et les carbones mésoporeux ; et les matériaux composites comprenant deux matériaux ou plus parmi les matériaux précités.

Le support peut se présenter sous une forme choisie parmi les particules telles que les granulés, les billes, les fibres, les tubes comme les nanotubes de carbone, les plaques et les plaquettes ; les membranes ; les feutres et les monolithes.

Avantageusement, le support se présente sous la forme d'une poudre constituée par des particules telles que des billes, et a une granulométrie de 0,5 mm à 1 mm.

Avantageusement, le support a une surface spécifique BET de 5 à 500 $m^2$/g, de préférence de 50 à 500 $m^2$/g, de préférence encore de 100 à 200 $m^2$/g.

En effet, un support avec une grande surface spécifique permet d'optimiser la quantité de nanoparticules insérées au sein du support.

Le procédé selon l'invention comprend une suite spécifique d'étapes spécifiques qui n'a jamais été décrite ou suggérée dans l'art antérieur.

En particulier, le procédé selon l'invention se distingue fondamentalement du procédé décrit dans le document [5] par le fait qu'il ne comporte plus d'étape de fixation chimique d'un greffon organique à la surface du support solide.

Selon l'invention, cette étape est remplacée par une étape au cours de laquelle on rend basique au moins une surface du support solide.

Tous les inconvénients liés à la présence d'un greffon, liant organique, dans le matériau final sont donc éliminés.

L'étape b) du procédé selon l'invention est beaucoup plus simple, beaucoup plus fiable, plus rapide et d'un moindre coût que l'étape de fixation chimique d'un greffon organique à la surface du support solide du procédé du document [5].

Il est, en outre, à noter que cette étape b) est particulièrement bien adaptée aux surfaces en oxydes.

Le procédé du document [5] est considérablement simplifié tout en permettant d'obtenir un matériau possédant les mêmes propriétés.

Le procédé selon l'invention est également défini en ce que, lors de l'étape d), on met en contact le support solide obtenu à l'issue de l'étape c) avec :

- une solution contenant un sel de $[M'(CN)_m]^{z-}$ (z= 3 ou 4), par exemple un sel de formule $[Alk_z]$ $[M'(CN)_m]$,
- et en outre, un sel d'un métal alcalin Alk, et non pas une solution contenant uniquement un sel de $[M'(CN)_m]^{z-}$, par

exemple un sel de formule [Alk$_z$] [M'(CN)$_m$].

Bien évidemment, le sel d'un métal alcalin Alk ajouté en plus, est différent, distinct, du sel de [M'(CN)$_m$]$^{z-}$, par exemple du sel de formule [Alk$_z$] [M'(CN)$_m$].

Il est à noter que peu importe la nature du sel de [M'(CN)$_m$]$^{z-}$ et la quantité d'alcalin qui est apportée lors de la dissolution du sel de [M'(CN)$_m$]$^{z-}$ (sel de cyanate) en solution. En effet, c'est le fait d'ajouter un sel d'un métal alcalin en plus du sel de cyanate -que ce dernier soit ou non un sel de métal alcalin- qui fait qu'on obtient la structure souhaitée selon l'invention telle que décrite plus haut.

Grâce à l'addition d'un sel de métal alcalin lors de cette étape du procédé selon l'invention, il est possible d'obtenir, de manière fiable, certaine et reproductible, le composé stoechiométrique tel que défini précédemment : [Alk$^+_x$]M$^{n+}$ [M'(CN)$_m$]$^{z-}$, alors que -et cela est unanimement confirmé par la littérature- un composé non stoechiométrique, par exemple de formule Alk$_x$M$_{1-x}$[M$^{II}$M$^{III}$(CN)$_6$]; Alk$_x$M$_{1-x}$ [M$^{III}$M'$^{II}$(CN)$_6$] ; Alk$_{2x}$M$_{1-x}$ [M$^{II}$M'$^{II}$(CN)$_6$] ; Alk$_x$M$_{1-x}$ [M$^{II}$M''$^V$(CN)$_8$] avec x strictement inférieur à 1 est obtenu lorsque cette synthèse est réalisée sans addition supplémentaire d'un sel de métal alcalin tel qu'un sel de potassium.

Le procédé selon l'invention ne présente pas les inconvénients, défauts, limitations et désavantages des procédés de l'art antérieur, et il apporte une solution aux problèmes des procédés de l'art antérieur tels que ceux décrits dans les documents cités plus haut.

En particulier comme on l'a déjà évoqué plus haut, le procédé selon l'invention, du fait de l'étape spécifique b) qu'il comprend, ne présente pas les inconvénients, défauts, limitations et désavantages du procédé du document [5], et il apporte une solution aux problèmes du procédé décrit dans ce document.

Le procédé selon l'invention est globalement, dans son ensemble, simple, fait appel à des processus connus et éprouvés, est fiable et parfaitement reproductible. En effet, il permet la préparation d'un produit final dont les caractéristiques, la composition -notamment en ce qui concerne la stoechiométrie en métal alcalin-, et les propriétés, sont parfaitement déterminées et ne subissent pas de variations aléatoires.

Le procédé selon l'invention a un faible impact sur l'environnement, en particulier car il ne met généralement pas en oeuvre des solvants organiques mais seulement de l'eau, qu'il ne fait généralement pas appel à des atmosphères contrôlées, et qu'il n'utilise pas de chauffage.

Le procédé selon l'invention comprend un nombre limité d'étapes simples, et les étapes de ce procédé, notamment les étapes de synthèse sont courtes, à savoir avec une durée qui n'excède pas quelques heures (par exemple, 20 min à 2 heures). La durée globale du procédé est donc courte, par exemple de 3 à 48 heures, en fonction du nombre de cycles, et en tout cas inférieure à celle du procédé du document [5].

Le procédé selon l'invention peut être réalisé avec toutes sortes de supports quelles que soient leur forme, taille, quantité, nature.

Le matériau préparé par le procédé selon l'invention, notamment du fait de l'étape b) spécifique qu'il comporte, possède toutes les propriétés avantageuses énumérées plus haut.

Avantageusement, lors de l'étape b), on met en contact, une ou plusieurs fois, au moins une surface du support solide inorganique poreux avec au moins une solution basique, de préférence au moins une solution aqueuse basique, de préférence sous agitation, jusqu' à ce que la valeur du pH de la solution basique en contact avec la surface soit stabilisée, stable, et demeure stable, à une valeur basique (voulue, déterminée) supérieure à 7, sous agitation, moyennant quoi on obtient un support solide dont au moins une surface a été rendue basique, puis on sépare le support solide de la solution basique, et éventuellement on sèche le support solide dont au moins une surface a été rendue basique.

Par pH stable, on entend que la valeur du pH reste stable pendant une durée de 10 minutes.

Ladite au moins une solution basique est généralement une solution aqueuse basique d'une base minérale, de préférence une solution aqueuse basique de NaOH ou de KOH, de préférence encore de KOH, à un pH supérieur à 7, de préférence supérieur ou égal à 9, de préférence supérieur ou égal à 10, par exemple cette solution aqueuse basique par exemple de KOH, peut avoir un pH de 9, 10, ou 14.Cette mise en contact peut être réalisée une fois, ou plusieurs fois successivement, en plusieurs opérations successives de mise en contact, les solutions basiques utilisées lors des mises en contact successives ayant le même pH ou des pH différents, par exemple des pH croissants.

Le pH de la solution basique est généralement suivi et ajusté en continu.

Plus exactement, la mise en contact de la solution basique avec le support solide peut être réalisée en ajoutant ladite solution basique, de préférence goutte à goutte, à une suspension, dispersion, contenant le support solide et en suivant, de préférence en continu, le pH du mélange de la solution basique et de la suspension, dispersion. L'addition de la solution basique est stoppée lorsque le pH du mélange de la solution basique et de la dispersion atteint une valeur basique voulue, souhaitée, et est stabilisé à une valeur basique, voulue, souhaitée.

La mise en contact est réalisée à la température ambiante (à savoir 15°C à 30°C, de préférence 20°C à 25°C), sans chauffage, et à la pression atmosphérique, sans appliquer de pression.

La valeur stable basique voulue du pH de la solution basique dépend de la nature du métal M, elle est de plus de 7 à 10, par exemple de 9, 10 ou 11. Elle est par exemple de 9 dans le cas du cuivre.

Avantageusement, la solution contenant l'ion $M^{n+}$ est une solution aqueuse d'un ou plusieurs sels contenant l'ion $M^{n+}$.

Avantageusement, la solution contenant un sel de $(M'(CN)_m)^{z-}$, par exemple un sel de formule $[Alk_z]$ $[M'(CN)_m]$, et un sel d'un métal alcalin Alk, est une solution aqueuse.

De préférence, les lavages sont réalisés avec de l'eau, notamment de l'eau ultra-pure.

Avantageusement, les étapes c) et d) sont réalisées en mode statique ou mode batch, ou bien en mode dynamique, par exemple dans une même colonne.

Avantageusement, les étapes c) et d) peuvent être répétées de 1 à 10 fois, de préférence de 1 à 4 fois.

En faisant varier le nombre de fois où la succession des étapes c) et d) est répétée, on peut facilement moduler la capacité d'extraction du matériau préparé par le procédé selon l'invention.

Le matériau préparé par le procédé selon l'invention peut être mis en oeuvre notamment, mais non exclusivement, dans un procédé pour extraire, séparer, au moins un cation métallique à partir d'un milieu liquide le contenant, dans lequel ledit milieu liquide est mis en contact avec le matériau.

Les matériaux préparé par le procédé selon l'invention, du fait de leurs excellentes propriétés telles qu'une excellente capacité d'échange, une excellente sélectivité, une vitesse de réaction élevée, conviennent particulièrement à un tel usage.

Cette excellente efficacité est obtenue avec des quantités réduites de matériau solide inorganique échangeur d'un cation métallique, tel qu'un hexacyanoferrate insoluble.

De plus, les excellentes propriétés de tenue et de stabilité mécaniques du matériau préparé par le procédé selon l'invention, résultant de sa structure spécifique permettent son conditionnement en colonne et la mise en oeuvre en continu du procédé de séparation, qui peut ainsi être facilement intégré dans une installation existante, par exemple dans une chaîne ou ligne de traitement comprenant plusieurs étapes.

Avantageusement, ledit milieu liquide peut être un milieu liquide aqueux, tel qu'une solution aqueuse, par exemple une eau de mer ou une eau saumâtre.

Les solutions qui peuvent être traitées avec le matériau préparé par le procédé selon l'invention sont très variées, et peuvent même contenir par exemple des agents corrosifs, ou autres, du fait de l'excellente stabilité chimique du matériau préparé par le procédé selon l'invention.

Le matériau préparé par le procédé selon l'invention est utilisable en particulier sur une très large gamme de pH, par exemple de 2 à 10. Par exemple, on pourra traiter des solutions acides (par exemple des solutions d'acide nitrique), par exemple de concentrations supérieures à 0,1 M, neutres, ou basiques jusqu'à un pH de 10.

Ledit milieu liquide peut être un liquide de procédé ou un effluent industriel.

Avantageusement, ledit milieu liquide peut être un milieu liquide tel qu'une solution aqueuse contenant des radionucléides. Par exemple, le milieu liquide peut être choisi parmi les liquides et effluents issus de l'industrie nucléaire, des installations nucléaires et des activités mettant en oeuvre des radionucléides.

Parmi ceux-ci, on peut citer par exemple les eaux de refroidissement et les effluents radioactifs issus de l'exploitation ou de l'assainissement/démantèlement des centrales nucléaires, les solutions aqueuses et effluents radioactifs issus des opérations d'exploitation ou d'assainissement/démantèlement des usines du cycle du combustible nucléaire, depuis la mine jusqu'au démantèlement des installations en fin de vie, ou encore les solutions aqueuses et effluents radioactifs provenant de laboratoires, centres de recherche ou autres industries mettant en oeuvre des radionucléides.

Il est toutefois évident que le matériau préparé par le procédé selon l'invention peut également être mis en oeuvre dans d'autres domaines d'activités, industriels ou autres, non nucléaires.

Ainsi, les hexacyanoferrates fixent sélectivement le thallium et cette propriété pourrait être mise à profit dans l'épuration des effluents de cimenterie pour réduire ou supprimer les rejets et émissions de cet élément qui est un poison violent.

Le milieu liquide, de préférence une solution aqueuse, peut, outre ledit cation métallique à séparer, contenir d'autres sels en solution tels que $NaNO_3$ ou $LiNOs$ ou encore $Al(NO_3)_3$ ou tout autre sel soluble de métal alcalin ou alcalino-terreux, par exemple à une concentration pouvant atteindre jusqu'à 2 moles/L. La solution peut également contenir, comme indiqué plus haut, des acides, bases, et même des composés organiques.

Ainsi, le milieu liquide peut être une solution aqueuse contenant, outre ledit cation métallique, des sels (bien sûr différents des sels dudit cation métallique) tels que du NaCl, par exemple à une concentration supérieure à 30 g/L.

Le procédé d'extraction mettant en oeuvre le matériau préparé par le procédé selon l'invention permet en effet, de manière étonnante, de séparer efficacement et sélectivement un cation métallique tel qu'un cation césium, même à partir de milieux liquides, tels que des solutions aqueuses, fortement chargés en sels, notamment en NaCl. De tels milieux fortement chargés en NaCl sont par exemple les eaux de mer et les eaux saumâtres.

Généralement, ledit cation métallique peut être présent à une concentration de 0,1 picogramme à 100 mg/L, de préférence de 0,1 picogramme à 10 mg/L.

Le terme « métal » recouvre aussi les isotopes et notamment les isotopes radioactifs dudit métal.

De préférence, le cation est un cation d'un élément choisi parmi Cs, Co, Ag, Ru, Fe et Tl et les isotopes, notamment radioactifs de ceux-ci parmi lesquels on peut citer $^{58}$Co, $^{60}$Co, $^{55-59}$Fe, $^{134}$Cs, $^{137}$Cs, et $^{103,105,105,107}$Ru.

Le cation métallique est en particulier le cation césium Cs.

De préférence encore, le cation est un cation du $^{134}$Cs, ou du $^{137}$Cs.

Une utilisation préférée du matériau préparé par le procédé selon l'invention est en effet la fixation du césium qui contribue à une grande part de l'activité gamma des liquides de l'industrie nucléaire et qui est fixé sélectivement par les hexacyanoferrates.

Le procédé de séparation, d'extraction mettant en oeuvre le matériau préparé par le procédé selon l'invention peut être mis en oeuvre avantageusement avec un milieu liquide qui est une solution aqueuse, contenant en tant que cation métallique un cation du $^{134}$Cs ou du $^{137}$Cs, et contenant en outre des sels, tels que du NaCl, de préférence à une concentration élevée, par exemple supérieure à 30 g/L.

Le procédé de séparation, d'extraction mettant en oeuvre le matériau préparé par le procédé selon l'invention permet de séparer efficacement et sélectivement ces cations métalliques de césium radioactif à partir de tels milieux liquides très chargés en sels comme NaCl. Cette séparation effective et sélective est possible grâce à la sélectivité du matériau préparé par le procédé selon l'invention vis-à-vis du Cs en présence d'un ion compétiteur comme le Na.

Ce procédé d'extraction, séparation mettant en oeuvre le matériau préparé par le procédé selon l'invention possède tous les avantages intrinsèquement liés au matériau préparé par le procédé selon l'invention, mis en oeuvre dans ce procédé d'extraction, séparation et qui ont déjà été décrits plus haut.

On a vu que le procédé de séparation qui met en oeuvre le matériau préparé par le procédé selon l'invention est de préférence mis en oeuvre en continu, le matériau nanocomposite préparé par le procédé selon l'invention, de préférence sous forme de particules, étant alors conditionné par exemple sous forme de colonne, le matériau formant de préférence un lit fluidisé dont la fluidisation est assurée par la solution à traiter, mais le procédé de fixation peut aussi être mis en oeuvre en discontinu, en mode « batch », la mise en contact du matériau échangeur et de la solution à traiter étant alors réalisée de préférence sous agitation. Le conditionnement en colonne permet de traiter en continu des quantités importantes de solution, avec un fort débit de celles-ci.

Le temps de contact de la solution à traiter avec le matériau préparé par le procédé selon l'invention est variable et peut aller, par exemple, de 1 minute à 1 heure pour un fonctionnement en continu et, par exemple de 10 minutes à environ 24 heures, pour un fonctionnement en « batch ».

A l'issue du procédé de fixation, les polluants se trouvant dans la solution, tels que des cations, sont immobilisés dans le matériau solide nanocomposite fixateur (échangeur) préparé par le procédé selon l'invention par sorption, c'est-à-dire par échange ionique ou adsorption au sein des nanoparticules, au sein de la structure des nanoparticules, elles-mêmes liées à la surface du support solide.

L'invention va maintenant être décrite plus en détail dans ce qui suit en liaison notamment avec des modes de réalisation particuliers de celle-ci qui font l'objet d'exemples.

Cette description est faite en relation avec les dessins joints.

## BRÈVE DESCRIPTION DES DESSINS

- La Figure 1 est un graphique qui donne la capacité d'adsorption Q du césium (en mg/g) du matériau préparé dans l'exemple 3, en fonction du temps (en minutes), lors des essais cinétiques réalisés dans l'exemple 5.
- La Figure 2 est un graphique qui représente la « *courbe de percée* » obtenue dans l'exemple 5 avec le matériau préparé dans l'exemple 4.

La courbe de percée reporte la concentration du Cs en sortie de colonne (en mg/L) en fonction du volume ayant traversé la colonne (V en mL) : pour ce faire, des prélèvements réguliers en sortie de colonne sont réalisés et une analyse des cations en solutions est alors réalisée.

## EXPOSÉ DÉTAILLÉ DE MODES DE RÉALISATION PARTICULIERS.

La première étape du procédé selon l'invention consiste à fournir un support solide.

Ce support est en un ou des matériaux inorganiques, minéraux.

Des matériaux préférés ont été cités plus haut.

Le support est poreux.

Précisons tout d'abord que le terme « poreux » tel qu'il est utilisé dans la présente en relation avec le support, signifie que ce support contient des pores ou vides.

En conséquence, la densité de ce support poreux est inférieure à la densité théorique du même support non poreux qui est qualifié de matériau massif.

Les pores peuvent être reliés ou isolés mais dans le support poreux du procédé selon l'invention, la majorité des pores sont reliés, en communication. On parle alors de porosité ouverte ou de pores interconnectés mais le procédé selon l'invention peut aussi être mis en oeuvre avec un support poreux dont les pores ne sont pas interconnectés.

Généralement, dans le support du procédé selon l'invention, les pores sont des pores percolants qui relient une première surface dudit support à une seconde surface principale dudit support.

Au sens de l'invention, un support est généralement considéré comme poreux lorsque sa densité est au plus d'environ 95% de sa densité théorique.

La porosité du support peut varier dans de larges limites, elle peut être généralement de 25% à 50%.

La porosité est généralement mesurée par analyse d'adsorption-désorption d'azote ou par prosimètre mercure.

Le support mis en oeuvre dans le procédé selon l'invention peut ne présenter qu'un seul type de porosité, par exemple une microporosité, une mésoporosité ou une macroporosité.

Ou bien, le support mis en oeuvre dans le procédé selon l'invention peut présenter simultanément plusieurs types de porosités choisis par exemple parmi une microporosité (taille des pores, par exemple diamètre, généralement inférieure à 2 nm), une mésoporosité (taille des pores, par exemple diamètre, de 2 à 20 nm), et une macroporosité (taille des pores, par exemple diamètre, supérieure à 20 nm, par exemple jusqu'à 100 nm).

La porosité peut être ordonnée, organisée, structurée, par exemple mésostructurée, ou non.

Il n'existe également aucune limitation quant à la taille du support, et la taille du support peut varier entre de larges limites.

Le support peut ainsi être un support de taille nanoscopique, c'est-à-dire d'une taille (définie par la plus grande dimension) de 50 nm à 100 nm, un support microscopique, c'est-à-dire d'une taille de 100 nm à 1 mm, ou un support macroscopique, c'est-à-dire d'une taille supérieure à 1 mm.

Le support peut revêtir toutes sortes de formes déjà décrites plus haut.

Le support peut ainsi se présenter sous la forme de particules telles que des sphères (billes) ou sphéroïdes, de fibres, de tubes notamment dans le cas de nanotubes de carbone, ou de plaques.

Toutefois, afin de permettre l'utilisation du support dans un procédé d'extraction en continu mis en oeuvre notamment dans une colonne, on préfère généralement que le support se présente sous la forme de particules formant une poudre. Et on préfère, en outre, que cette poudre ait une granulométrie (taille de particules) qui réduise les pertes de charge potentielles. Une granulométrie idéale est de 0,5 mm à 1 mm.

La taille des particules est définie par leur plus grande dimension qui est leur diamètre dans le cas de sphères ou de sphéroïdes.

Une autre forme préférée pour le support et qui permet également de réduire les pertes de charge (pour une utilisation sous flux) est la forme de monolithes, généralement d'une taille d'au moins 5 mm contenant des macropores.

Avantageusement, le support a une surface spécifique BET de 50 à 500 $m^2/g$, de préférence de 100 à 200 $m^2/g$ mesurée par adsorption-désorption d'azote ou porosimètrie mercure.

Dans les procédés de l'art antérieur, tel que le procédé du document [5], le support est généralement lavé, par exemple à l'eau ultra-pure, une ou plusieurs fois, puis séché par exemple à l'étuve à une température de 120°C pendant 24 heures avent de réaliser les autres étapes du procédé. Dans le procédé selon l'invention, cette préparation du support par lavage et séchage n'ont pas lieu d'être et ne sont pas nécessaires.

Dans une première étape, au moins une surface du support est rendue basique. Le support est mis en contact avec une solution basique, de préférence une solution aqueuse basique.

Cette mise en contact du support avec la solution basique peut être réalisée en mode dynamique, c'est-à-dire que le support solide est mis en contact avec un courant de la solution qui circule en circuit ouvert

Ou bien, la mise en contact peut être réalisée en mode batch agité.

La durée totale de la mise en contact est généralement de l'ordre de 2 heures.

Par exemple, on peut placer le support solide dans une solution aqueuse basique contenue dans un récipient. Le temps de mise en contact (en mode batch agité) est très court (instantané ou quasi instantané) et sert uniquement à mouiller le support.

A cette solution aqueuse est ajoutée petit à petit une solution basique concentrée, de préférence une solution de KOH de pH 13. Au cours de cette addition, le pH de la solution en contact avec le support est mesuré et l'ajout est arrêté lorsque que le pH de la solution en contact avec le support est stable, à une valeur fixée, souhaitée par exemple entre 8 et 10, et que ce pH reste stable à cette valeur souhaitée pendant une durée de 10 à 15 minutes, par exemple 10 minutes.

La durée de cette étape est courte, par exemple de l'ordre de 2 heures.

A l'issue de cette étape, le solide est séparé de la solution (par exemple par filtration ou décantation) et, sans qu'un autre traitement ne soit nécessaire, le support solide est mis en contact avec la solution aqueuse contenant le sel de $M^{n+}$.

A la fin de cette première étape, on obtient donc un support solide dont une surface a été rendue basique.

De préférence, toutes les surfaces accessibles du support sont rendues basiques.

Les étapes qui vont maintenant être décrites pour la préparation des nanoparticules sur une surface rendue basique du support solide, sont sensiblement analogues à celles du procédé décrit dans le document WO-A1-2016/038206 [5]. En particulier selon l'invention, lors de l'étape d), on met en contact le support solide obtenu à l'issue de l'étape c) avec une solution contenant un sel de $(M'(CN)_m)^{z-}$, par exemple un sel de formule $[Alk_z] [M'(CN)_m]$, et en outre un sel d'un métal alcalin Alk différent du complexe), et non pas avec une solution contenant uniquement un complexe ou sel de $(M'(CN)_m)^{z-}$, par exemple un sel de formule $[Alk_z] [M'(CN)_m]$.

On pourra donc se référer à ce document pour ce qui concerne notamment les réactifs et conditions opératoires mis en oeuvre dans ces étapes mais aussi pour la description des nanoparticules.

On procède donc ensuite dans une deuxième étape à la croissance des nanoparticules sur ladite surface, rendue basique, du support solide.

Cette croissance est réalisée en deux étapes successives, éventuellement répétées.

Il s'agit des étapes c) et d) du procédé selon l'invention dont la succession constitue ce que l'on peut appeler un cycle d'imprégnation, ledit cycle étant éventuellement répété.

On commence par mettre en contact le support solide dont une surface a été rendue basique, avec une solution aqueuse contenant l'ion $M^{n+}$, généralement sous la forme d'un sel métallique.

Le solvant de cette solution est donc de l'eau, de préférence de l'eau ultra-pure.

Le sel de métal contenu dans cette solution est un sel dont le métal est généralement choisi parmi les métaux susceptibles de donner un cyanométallate de ce métal, tel qu'un hexacyanoferrate de ce métal, qui soit insoluble.

Ce métal peut être choisi parmi tous les métaux de transition, par exemple parmi le cuivre, le cobalt, le zinc, le nickel et le fer etc. L'ion $M^{n+}$ pourra donc être choisi parmi les ions $Fe^{2+}$, $Ni^{2+}$, $Fe^{3+}$, $Co^{2+}$, $Cu^{2+}$, et $Zn^{2+}$.

Le sel de métal peut être par exemple un nitrate, un sulfate, un chlorure, un acétate, un tétrafluoroborate, éventuellement hydraté, d'un de ces métaux M.

Par exemple, il peut s'agir de nitrate de cuivre.

La concentration du sel de métal dans la solution est de 0,01 à 1 mol/L, de préférence encore de 0,1 à 0,5 mol/L.

La quantité de sel utilisée est, par ailleurs, de préférence environ de 0,1 à 1 mmol/g de support solide traité.

La mise en contact que l'on peut aussi qualifier d'imprégnation du support solide est effectuée en général à température ambiante, et sa durée est généralement de 4 à 96 heures.

Cette mise en contact peut être réalisée en mode statique aussi appelé mode « batch », de préférence sous agitation, auquel cas sa durée est généralement de 12 à 96 heures, ou bien en mode dynamique (en lit fixe ou lit fluidisé) auquel cas sa durée est généralement de 4 à 24 heures.

A l'issue de cette mise en contact, on obtient un support solide dans lequel des cations $M^{n+}$ sont adsorbés à la surface rendue basique du support.

A la fin de la mise en contact, on procède à un lavage du support solide.

En mode batch, on retire généralement le support solide de la solution et on procède au lavage.

En mode dynamique, on ne retire pas le support solide de la solution, mais on réalise le lavage directement.

Le lavage consiste à laver une ou plusieurs fois, par exemple 1 à 3 fois le support solide, de préférence à l'eau.

Cette opération de lavage permet d'éliminer le sel de métal en excès et d'obtenir un produit stable à la composition parfaitement définie.

On peut alors procéder éventuellement à un séchage qui est possible mais pas nécessaire.

On met ensuite en contact le support solide qui a réagi avec le cation de métal $M^{n+}$ comme décrit ci-dessus, avec une solution d'un sel de $(M'(CN)_m)^{z-}$, par exemple un sel de formule $Alk_z[M'(CN)_m]$, de préférence encore une solution d'un sel de formule $K_z[M'(CN)_m]$ ; et en outre d'un sel d'un métal alcalin Alk.

Le métal alcalin Alk peut être choisi parmi Li, Na, et K, et de préférence Alk est K.

Le sel d'un métal alcalin est différent, distinct, du sel de $(M'(CN)_m)^{z-}$ aussi contenu dans la solution.

Le sel d'un métal alcalin peut être choisi par exemple parmi les nitrates, sulfates, et halogénures (chlorures, iodures, fluorures) d'un métal alcalin Alk, tel que le nitrate de potassium.

Avantageusement, le solvant de cette solution est l'eau et de préférence, l'eau ultra-pure.

La mise en contact que l'on peut aussi qualifier d'imprégnation du support solide est effectuée en général à température ambiante, et sa durée est généralement de 2 à 96 heures.

Cette mise en contact peut être réalisée en mode statique ou mode « batch », de préférence sous agitation, auquel cas sa durée est généralement de 12 à 96 heures, ou bien en mode dynamique, auquel cas sa durée est généralement de 2 à 24 heures.

Le sel de $(M'(CN)_m)^{z-}$, répond généralement à la formule suivante :

$(Alk)_z [M'(CN)_m]$, où M', m, et z ont la signification déjà donnée plus haut, et Alk est un cation monovalent choisi parmi les cations de métaux alcalins Alk tels que K ou Na, de préférence encore, le sel de $(M'(CN)_m)^{z-}$, répond à la formule suivante $K_z [M'(CN)_m]$, par exemple $K_4Fe(CN)_6$.

La concentration du sel d'un métal alcalin dans la solution est généralement de 0,001 à 1 mol/L, de préférence de 0,001 à 0,05 mol/L.

Avantageusement, la concentration du sel de $(M'(CN)_m)^{z-}$, et la concentration du sel d'un métal alcalin sont les mêmes.

D'autre part, la solution de sel de $[M'(CN)_m]^{z-}$ mise en oeuvre est généralement préparée de telle sorte que le rapport massique du sel à la quantité du support d'imprégnation constitué par le support solide initial, soit de préférence de 0,1 à 5 mmol/g de support solide.

On obtient ainsi la fixation de la partie anionique $[M'(CN)_m]^{z-}$, par exemple $[Fe(CN)_6]^{4-}$, du sel de $[M'(CN)_m]^z$, par exemple de formule $Alk_z[M'(CN)_m]$, sur les cations $M^{n+}$ et simultanément l'insertion de l'alcalin dans la structure du cristal. Cette fixation se fait par formation de liaisons de type covalentes qui sont relativement fortes selon le milieu, et cette fixation est généralement quantitative, c'est-à-dire que tous les cations $M^{n+}$ réagissent. La fixation ne présente donc aucun caractère aléatoire.

L'insertion d'alcalins dans l'ensemble des sites de la structure du cristal est possible grâce d'une part à la présence éventuelle d'alcalin dans le sel tel que $Alk_z[M'(CN)_m]$ mais surtout par la présence, en outre, d'un sel d'un métal alcalin ajouté à la solution d'imprégnation.

C'est pourquoi il est généralement préférable que ce soit le même métal alcalin Alk qui soit présent dans le sel de $[M'(CN)_m]^z$, tel que $Alk_z[M'(CN)_m]$ ainsi que dans le sel de métal alcalin de la solution d'imprégnation.

A la fin de la mise en contact, on procède à un lavage du support solide.

En mode batch, on retire généralement le support solide de la solution et on procède au lavage.

En mode dynamique, on ne retire pas le support solide de la solution, mais on réalise le lavage directement.

Le lavage consiste à laver une ou plusieurs fois, par exemple 1 à 3 fois, le support, de préférence avec le même solvant que le solvant de la solution de complexe, tel que l'eau ultra-pure.

Cette opération de lavage a pour but d'éliminer les sels de $[M'(CN)_m]^z$ ainsi que les nanoparticules qui n'ont pas été fixés sur les cations $M^{n+}$ et permet d'obtenir un support solide dans lequel il n'existe plus de $[M'(CN)_m]^{z-}$ libre, non lié, pouvant être relargué.

La succession des étapes de mise en contact du support solide avec le cation de métal $M^{n+}$ et de lavage (une ou plusieurs fois), puis de mise en contact du support solide avec une solution d'un sel de $[M'(CN)_m]^{z-}$, par exemple de $[M'(CN)_m]^{3-}$, et d'un sel d'un métal alcalin, et de lavage (une ou plusieurs fois), peut n'être effectuée qu'une seule fois, ou bien elle peut être répétée, généralement de 1 à 10 fois, par exemple de 1 à 4, 5, 6 ou 7 fois ; on peut ainsi parfaitement régler la capacité d'extraction du matériau.

La teneur pondérale en fixateur minéral, c'est-à-dire par exemple en hexacyanoferrate de métal insoluble et de métal alcalin de formule $[Alk^+_x]M^{n+}[M'(CN)_m]^{z-}$est généralement de 1 à 10%, par rapport à la masse du support solide.

L'invention va maintenant être décrite en référence aux exemples suivants, donnés à titre illustratif et non limitatif.

## EXEMPLES.

### Exemple 1.

Dans cet exemple, on montre comment la surface d'une silice brute sèche peut être rendue basique.

(1) Détermination du pH d'une silice brute sèche

Pour déterminer le pH d'une silice brute sèche, quelques grammes de silice brute sèche, n'ayant subi aucun prétraitement, sont mises en contact avec quelques gouttes de Bleu de Bromothymol.

Les différentes formes que peut présenter le bleu de Bromothymol, et les différentes couleurs que peut avoir le Bleu de Bromothymol selon le pH sont indiquées dans le Tableau I ci-dessous.

| Tableau I : Couleurs du bleu de Bromothymol | | | | |
|---|---|---|---|---|
| *forme acide 1* | *zone de virage* | *forme acide 2* | *zone de virage* | *forme basique* |
| **fuchsia** | env. pH 0 | **jaune** | pH 6,0 à pH 7,6 | **bleu** |

On observe visuellement, que la silice brute sèche, n'ayant subi aucun prétraitement, qui a été mise en contact avec quelques gouttes de Bleu de Bromothymol présente une coloration jaune.

Cette coloration jaune montre que le pH de la silice brute sèche est inférieur à 6.

(2) Prétraitement de silices - préparation de silices prétraitées dont la surface est redue basique par mise en contact avec des solutions basiques de KOH.

Un prétraitement de la silice brute a été réalisé afin de voir s'il est possible de rendre basique la surface de cette dernière.

Cette étape de prétraitement consiste donc à :

> Préparer une solution basique de KOH très concentrée à un pH très élevé de 14.
> Ajouter cette solution basique de KOH à pH 14 ainsi préparée, respectivement à trois suspensions contenant la silice solide, goutte à goutte, en suivant en continu le pH du mélange de la solution basique et de la dispersion.
Il se produit une réaction du KOH avec la silice.

L'addition de la solution basique est stoppée lorsque le pH du mélange de la solution basique et de la dispersion atteint une valeur voulue, souhaitée, et est stabilisé à une valeur basique, voulue, souhaitée à savoir respectivement une valeur de 9 (silice prétraitée I), de 10 (silice prétraitée II) ou de 11 (silice prétraitée III).

Ces valeurs de pH sont appelées valeurs de pH stabilisées, respectivement à 9, 10, et 11.

(3) Mesure, vérification du pH de la surface des silices prétraitées.

Afin de vérifier le pH de la surface des trois silices prétraitées I, II, et III, préparées comme cela est décrit plus haut, quelques grammes de chacune de ces différentes silices prétraitées I, II, et III et séchées ont été mis en contact avec un autre indicateur coloré, spécifique de la gamme de pH basique, la Phénolphtaléine.

Rappelons que la Phénophtaléine a une couleur rose dans une gamme de pH de 9 à 10, et une couleur violette pour un pH supérieur à 10.

On observe visuellement les coulures obtenues suite à la mise en contact de chacune des trois silices prétraitées I, II, et III avec la Phénophtaléine.

Les différentes couleurs obtenues montrent que le pré-traitement subit par la silice conduit à une augmentation du pH du matériau, et donc de la surface.

En effet, les trois silices prétraitées ont, suite à leur mise en contact avec la Phénolphtaléine, des couleurs qui correspondent respectivement à un pH de 10,8 (couleur violette) pour la silice prétraitée III, à un pH de 10 (couleur rose) pour la silice prétraitée II, à un pH de 9 (couleur rose pâle) pour la silice prétraitée I.

Cet exemple montre qu'il est possible de contrôler le pH de surface de la silice selon le prétraitement avec une solution basique de KOH réalisé, plus exactement selon le pH de la solution basique de KOH utilisée pour le prétraitement de la silice.

En effet, 3 silices dont le pH de surface est différent (à savoir, 10,8 ; 10 et 9) selon le pH de la solution basique de KOH utilisée pour le prétraitement (à savoir respectivement 11; 10; et 9) ont pu être obtenues comme l'atteste les observations visuelles effectuées.

Exemple 2.

Dans cet exemple, on prépare un matériau par le procédé selon l'invention, par insertion de nanoparticules de ferrocyanure de Cuivre-Potassium stoechiométrique au sein d'un gel de silice poreux, dont la surface est rendue basique par mises en contact successives de cette surface avec une solution basique de KOH de pH 9.

On mesure ensuite la capacité d'extraction de ce matériau vis-à-vis du césium.

• Préparation d'un matériau par le procédé selon l'invention.

Dans cet exemple, le procédé de préparation selon l'invention est mis en oeuvre avec un support qui est un gel de silice poreux commercial, sous la forme de granulés d'une granulométrie 200-500 $\mu$m, d'une taille de pores de 30 nm, et présentant une surface spécifique BET de l'ordre de 130 $m^2$/g.

Le mode opératoire pour l'insertion de ferrocyanure de Cuivre-Potassium ($K_2Cu(Fe(CN)_6)$) au sein de ce gel de silice poreux comprend les étapes 1 et 2 suivantes :

1. Modification de la surface de la silice afin de la rendre basique par mises en contact successives de cette surface avec une solution basique de KOH.

1.1 1ère mise en contact : Environ 10 g de gel de silice (tel que décrit ci-dessus) sont mis en contact avec 250 mL d'une solution de KOH de pH 9. Lors de cette 1ère mise en contact, le pH de la solution initialement égal à 9 décroit immédiatement de 2 points de pH. Agitation pendant 24 h, puis récupération du solide par retrait du surnageant.

1.2. 2ème mise en contact avec 250 mL de la solution de KOH de pH 9 : le pH de la solution, initialement égal à 9 décroît d'environ 1 point de pH. Agitation pendant 24 h, puis récupération du solide par retrait du surnageant.

1.3. 3ème mise en contact avec 250mL de la solution de KOH de pH 9 : le pH de la solution, après 24 h d'agitation est resté stable, égal à pH 9. Le solide est récupéré par retrait du surnageant, puis séchage à l'air pendant 24 h.

2. Etape d'imprégnation avec des solutions précurseurs de ferrocyanures de cuivre-potassium

2.1. Une première solution de nitrate de cuivre ($Cu(NO_3)_2$) (de concentration $5.10^{-2}$ mol/L en $Cu^{2+}$ (soit 3,2 g/L)) est préparée. Le pH de cette solution est de 4,5.

1 g de gel de silice modifié comme cela est décrit dans l'étape 1 est mis en contact avec 10 mL de cette solution de nitrate de Cuivre, pendant 2 heures. Puis le solide est récupéré, et éventuellement rincé à l'eau ultra pure. Aucune étape de séchage n'est nécessaire ici.

A l'issue de cette étape, le cuivre est inséré au sein de la silice sous forme d'espèces mono ou polynucléaires de type oxo-hydroxo de cuivre hydraté, grâce au caractère basique de la surface de la silice. Cette voie de synthèse conduit à une quantité significative d'espèces de cuivre introduites au sein du gel de silice, comme le montre la coloration bleu du support.

2.2 Une seconde solution contenant du ferrocyanure de potassium et du nitrate de potassium, chacun à une concentration de $10^{-1}$ mol/L est préparée.

1 g de gel de silice chargé en cuivre est mis en contact avec 10 mL de cette solution pendant 2 heures. Cette étape conduit à la formation de ferrocyanure de cuivre-potassium stoechiométrique avec un ion potassium dans les cages de la structure. Le solide est récupéré, et éventuellement rincé à l'eau ultra pure.

La mise en contact avec ($Cu(NO_3)_2$) puis ($K_4Fe(CN)_6+KNO_3$) est appelée « cycle d'imprégnation ». Ce cycle d'imprégnation est répété 2 fois moyennant quoi on obtient le matériau recherché.

La capacité d'extraction est directement liée au nombre de cycles d'imprégnation réalisés (voir exemple 2), ainsi on peut moduler cette capacité très facilement au cours de la synthèse du matériau.

Le matériau est ensuite rincé à l'eau ultra-pure puis séché à l'air pendant 48 heures.

• Mesure de la capacité d'extraction vis-à-vis du césium, du matériau préparé ci-dessus par le procédé selon l'invention .

La mesure de la capacité d'extraction vis-à-vis du Cs du matériau préparé par le procédé selon l'invention comme décrit ci-dessus avec 2 cycles d'imprégnation est réalisée en utilisant le test dit de référence à partir d'une solution à 100 mg/g de nitrate de césium.

50 mg du matériau préparé par le procédé selon l'invention comme décrit ci-dessus sont placés dans 50 mL de cette solution à 100 mg/g de nitrate de césium pendant une vingtaine d'heures. L'analyse de la concentration en Cs se fait dans les solutions initiale et finale afin d'évaluer la capacité d'adsorption du matériau. Cette capacité d'adsorption s'exprime ainsi :

$$Q_e = \left([Cs]_i - [Cs]_f\right)\frac{V}{m}$$

où $[Cs]_i$ et $[Cs]_f$ sont respectivement les concentrations en Cs initiale et finale, analysées par adsorption atomique ; V est le volume de solution utilisé et m la masse de matériau utilisée.

La capacité mesurée pour le matériau préparé par le procédé selon l'invention préparé comme décrit ci-dessus dans cet exemple est de 12 mg/g.

Exemple 3:

Dans cet exemple, on prépare un matériau par le procédé selon l'invention, par insertion de nanoparticules de ferrocyanure de cuivre potassium stoechiométrique au sein d'un gel de silice poreux dont la surface est rendue basique par mise en contact de cette surface avec une solution basique de KOH dont le pH est suivi et ajusté en continu.

On mesure ensuite la capacité d'extraction de ce matériau vis-à-vis du césium.

- Préparation d'un matériau par le procédé selon l'invention

  Dans cet exemple, le procédé de préparation selon l'invention est mis en oeuvre avec le même support que dans l'exemple 2, mais l'ajustement du pH lors de l'étape 1 se fait de façon contrôlée. D'autre part, l'effet du nombre de cycles d'imprégnation sur les propriétés du matériau a également été étudié.

- Modification de la surface de la silice afin de la rendre basique par ajout contrôlé d'une solution basique de KOH.

  Environ 5 g de gel de silice (tel que décrit ci-dessus) sont mis en contact dans un bécher avec 250 mL d'une solution de KOH de pH 10. L'agitation se fait à l'aide d'une pale d'agitation directement dans le bécher. Le pH de la solution est suivi en ligne à l'aide d'un pH mètre, et on stabilise le pH à 10 par ajouts successifs d'une solution mère de KOH de pH 13. Après stabilisation du pH de la solution à 9,3 (donc après l'ajout de 18 mL de la solution de KOH de pH 13), correspondant à environ 1,5 h d'essai, le surnageant est prélevé puis les étapes d'imprégnation (2.) sont réalisées.

- Etape d'imprégnation avec les solutions précurseurs de ferrocyanures de cuivre-potassium.

Une première solution de nitrate de cuivre ($Cu(NO_3)_2$) (de concentration $10^{-1}$ mol/L en $Cu^{2+}$ (soit 6,4 g/L)) est préparée.

5 g de gel de silice modifié tel que décrit dans l'étape 1 sont mis en contact avec 10 mL de cette solution de nitrate de cuivre, pendant 2 heures. Puis le solide est récupéré, et éventuellement rincé à l'eau ultra pure. Aucune étape de séchage n'est nécessaire ici. A l'issue de cette étape, l'analyse de la solution de cuivre avant et après mise en contact montre une incorporation de l'ordre de 0,5% en masse de Cu dans le gel de silice (5 mg de Cu par g de solide).

Puis, comme précédemment, une seconde solution contenant du ferrocyanure de potassium et du nitrate de potassium à des concentrations de $10^{-1}$ Mol/L est préparée.

5 g de gel de silice chargé en cuivre sont mis en contact avec 10 mL de cette solution. Cette étape conduit à la formation de ferrocyanure de cuivre-potassium stoechiométrique avec un ion potassium dans les cages de la structure.

La mise en contact avec ($Cu(NO_3)_2$) puis ($K_4Fe(CN)_6$+$KNO_3$) est appelée « cycle d'imprégnation ». Ce cycle d'imprégnation est répété 1 ou 2 fois. Après chaque cycle d'imprégnation, une petite quantité de matériau est prélevée afin de mesurer la capacité d'extraction du Cs et d'étudier l'effet du nombre de cycle sur les propriétés du matériau.

- Mesure de la capacité d'extraction vis-à-vis du césium du matériau, préparé ci-dessus, selon le procédé de l'invention, en fonction du nombre de cycles d'imprégnation.

Cette capacité d'extraction est mesurée de façon identique à ce qui est décrit dans l'exemple 1.

Cycle 1: la capacité mesurée est de 15,76 mg/g
Cycle 2: la capacité mesurée est 18,14 mg/g

Aucune trace de Cu, Fe n'est trouvée dans les analyses faites par « *ICPAES* » sur les 2 solutions finales de nitrate de césium correspondantes (la teneur en ces éléments est donc inférieure à la limite de détection).

Il apparaît donc qu'un cycle unique d'imprégnation suffit pour atteindre des capacités d'extraction satisfaisantes. Ce point est important pour réduire les coûts de fabrication, en limitant les étapes et donc en diminuant le temps de fabrication.

Exemple 4 :

Dans cet exemple, on prépare un matériau par le procédé selon l'invention, par insertion de nanoparticules de ferrocyanure de Cuivre-Potassium stoechiométrique au sein d'un gel de silice poreux. Mais on utilise 100 g de gel de silice au lieu de 5 g ou 10 g, afin d'évaluer l'effet du changement d'échelle de la quantité de départ de gel de silice sur cette voie de synthèse, en vue d'une industrialisation.

On mesure ensuite la capacité d'extraction de ce matériau vis-à-vis du césium.

- Préparation du matériau par le procédé selon l'invention.

100g de gel de silice sont mis en contact avec 250 mL d'une solution dont le pH, égal à 9, a été ajusté à l'aide de KOH. Puis le pH est mesuré en continu, la suspension étant agitée à l'aide d'une pale d'agitation. Le pH est alors ajusté en continu par ajout d'une solution de KOH de pH 13, jusqu'à ce que le pH soit stable et égal à 9,5. Cet essai dure de l'ordre d'une à deux heures.

A l'issue de cette étape, le surnageant est enlevé.

Les étapes d'imprégnations sont alors réalisées comme cela est décrit dans les exemples précédents, avec 3 cycles d'imprégnation.

• Mesure de la capacité d'extraction vis-à-vis du césium du matériau préparé ci-dessus, par le procédé selon l'invention, en fonction du nombre de cycles d'imprégnation.

On réalise une mesure de la capacité d'extraction entre chaque cycle.

Les mesures de capacités d'extraction sont les suivantes :

Cycle 1: 13,81 mg/g
Cycle 2: 18,01 mg/g
Cycle 3: 34,4 mg/g

Aucune trace de Cu, Fe n'est trouvée dans les analyses faites en ICP AES sur ces 3 solutions finales de nitrate de césium correspondantes (la teneur en ces éléments est donc inférieure à la limite de détection).

Ces résultats valident la possibilité de fabriquer un matériau par le procédé selon l'invention, à une échelle supérieure à celle des exemples 2 et 3, à savoir 100 g, dans des conditions « douces », ne faisant intervenir que de l'eau comme solvant et pour des durées de synthèse rapide, à savoir environ 6 heures pour un cycle complet.

Exemple 5.

Dans cet exemple, on étudie la cinétique d'extraction, d'adsorption du césium par le matériau préparé par le procédé selon l'invention préparé dans l'exemple 4, et on réalise un essai d'extraction du césium par le matériau préparé par le procédé selon l'invention préparé dans l'exemple 4 dans une colonne.

• Essais cinétiques.

En vue de l'utilisation de ce matériau en colonne, des essais cinétiques ont été réalisés sur le matériau préparé dans l'exemple 4.

Ces essais cinétiques consistent à mettre en contact 50 mg de matériau avec 50 mL d'effluent, sous agitation, pendant différentes durées.

Chaque point de cinétique correspond à une mesure de capacité d'extraction pour une durée de contact.

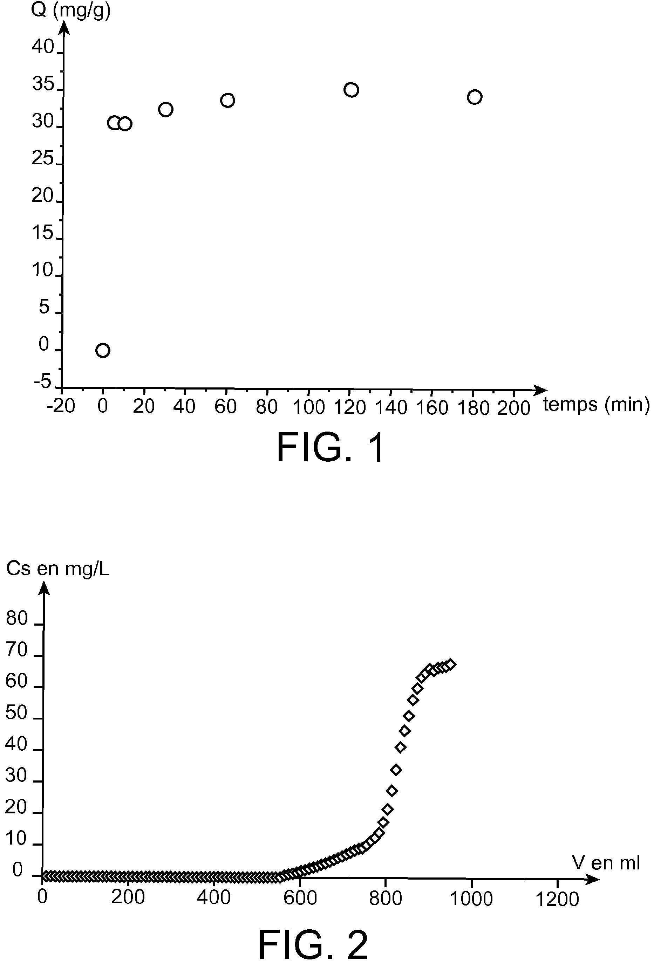

La solution initiale est une solution d'eau ultrapure dans laquelle ont été dissous 100 mg/L de Cs, sous forme de $CsNO_3$. Le Cs dans la solution initiale et les solutions finales est analysé par spectroscopie d'adsorption atomique. Les résultats cinétiques sont présentés sur la figure 1.

La figure 1 montre que la cinétique d'adsorption est extrêmement rapide (quelques minutes).

De plus, les analyses du K en solution montrent un échange total entre le K du solide et le Cs de la solution, sans relargage de Cu, Fe ou Si.

• Essais en colonne.

Les propriétés du matériau préparé dans l'exemple 4 ont alors été évaluées grâce à la détermination d'une « courbe de percée ».

Pour cela, 2 g de matériau préparé dans l'exemple 4 sont placés dans une colonne de diamètre 1cm. Cette quantité de matériau correspond alors à une hauteur de colonne de 5 cm.

Une solution contenant 70 mg/L de Cs sous forme de $CsNO_3$ traverse la colonne à un débit de 160 mL/h, correspondant à une vitesse linéique de 2 m/h et la concentration en sortie de colonne est mesurée par spectroscopie d'adsorption atomique à intervalles réguliers. On obtient ainsi une courbe de percée. Cette courbe de percée est représentée sur la figure 2.

La forme de cette courbe de percée est particulière intéressante et montre que ce matériau est bien adapté, sous forme de lit fixe, pour une mise en oeuvre dans un procédé industriel d'extraction du Cs.

Exemple 6 :

Dans cet exemple, on prépare un matériau par le procédé selon l'invention, par insertion de nanoparticules de ferrocyanure de nickel-potassium stoechiométrique au sein d'un gel de silice poreux, dont la surface est rendue basique par mises en contact successives de cette surface avec une solution basique de KOH de pH 9.

On mesure ensuite la capacité d'extraction de ce matériau vis-à-vis du césium.

Cet exemple a pour objectif de valider la possibilité d'étendre le procédé de synthèse à d'autres types de ferrocyanure.

Dans cet exemple, on cherche donc à obtenir un matériau contenant des ferrocyanures de nickel-potassium, connus pour avoir une bonne efficacité d'extraction vis à vis du Cs en milieu acide.

• Préparation d'un matériau par le procédé selon l'invention

L'étape de modification de la surface du support de gel de silice par une solution basique est identique à celle qui est décrite dans l'exemple 2.

L'étape d'imprégnation diffère en ce que le sel de cuivre est remplacé par un sel de nickel lors de la première phase d'imprégnation. Pour cela, une première solution de sulfate de Nickel ($Ni(SO_4)_2$) (de concentration $10^{-1}$ mol/L en $Ni^{2+}$) est préparée.

1 g de gel de silice « basifié » est mis en contact avec 10 mL de cette solution de sulfate de Nickel, pendant 2 heures. Puis le solide est récupéré et rincé à l'eau ultra pure. Aucun séchage n'est nécessaire ici. Puis, comme dans l'exemple 2, une seconde solution contenant du ferrocyanure de potassium et du nitrate de potassium chacune à une concentration de $10^{-1}$ Mol/L, est préparée. 1 g de gel de silice chargé en nickel est mis en contact avec 10 mL de cette solution. Cette étape conduit à la formation de ferrocyanure de nickel-potassium stoechiométrique avec un ion potassium dans les cages de la structure. Ce cycle d'imprégnation est répété 3 fois et la capacité d'extraction est alors mesurée.

• Mesure de la capacité d'extraction vis-à-vis du césium du matériau préparé ci-dessus, par le procédé selon l'invention, après 3 cycles d'imprégnation.

Cette capacité d'extraction est mesurée de façon identique à ce qui est décrit dans l'exemple 2.

Cycle 3: la capacité mesurée est de 48 mg/g.

L'analyse du Potassium relargué par le matériau correspond à un pur échange Cs<-> K. La concentration en Ni et Fe est inférieure à la limite de détection.

Le procédé de synthèse selon l'invention est donc utilisable pour d'autres types de ferrocyanure, comme le ferrocyanure de nickel potassium, conduisant à un matériau dans lequel l'échange avec le Cs se fait uniquement avec le potassium de la structure.

## REFERENCES

[1] WO-A2-2010/133689.

[2] H. Mimura, M. Kimura, K. Akiba, Y. Onodera, « Sélective removal of césium from highly concentrated sodium nitrate neutral solutions by potassium nickel hexacyanoferrate(II)-loaded silica gels », solvent extraction and ion exchange, 17(2), 403-417, (1999).

[3] L. Sharigyn, A. Muromskiy, M. Kalyagina, S. Borovkov, "A granular inorganic cation-exchanger sélective to césium", J. Nuclear Science and Technology, 44 (5), 767-773, (2007).

[4] Sanhita Chaudhury, A.K. Pandey ; A. Goswami, « Copperferrocyanide loaded track etched membrane on effective césium absorbent », J. Radioanal. Nucl. Chem 204 (2015) 697-703.

[5] WO-A1-2016/038206.

[6] Kazemian H. et al. : "Cs and Sr removal from solution using potassium nickel hexacynaoferrate impregnated zeolites", Journal of Radioanalytical and Nuclear Chemistry, vol. 268, no. 2, May 2006, pages 231-236.

## Revendications

**1.** Procédé de préparation d'un matériau solide nanocomposite comprenant des nanoparticules d'un hexacyanométallate ou octacyanométallate d'un métal alcalin et d'un métal de transition, répondant à la formule $[Alk^+_x]M^{n+}[M'(CN)_m]^{z-}$ où Alk est un métal alcalin, x est 1 ou 2, M est un métal de transition, n est 2 ou 3, M' est un métal de transition, m est 6 ou 8, z est 3 ou 4, fixées à au moins une surface d'un support solide inorganique poreux, dans lequel les nanoparticules sont fixées par adsorption à ladite au moins une surface du support solide inorganique poreux,, dans lequel on réalise les étapes successives suivantes :

a) on fournit un support solide inorganique poreux;

b) on rend basique au moins une surface du support solide inorganique poreux en mettant en contact ladite au moins une surface avec une solution basique, sous agitation, jusqu'à ce que le pH de cette solution basique en contact avec ladite au moins une surface, soit stabilisé, et demeure stable, à une valeur basique, supérieure à 7, pendant une durée de 10 minutes ; la mise en contact étant réalisée à une température de 15°C à 30°C, sans chauffage, et à la pression atmosphérique, sans appliquer de pression ; et étant entendu que pour déterminer si ladite au moins une surface est une surface basique on met en contact ladite au moins une surface du support solide inorganique avec un indicateur coloré spécifique de la gamme de pH basique puis on observe la couleur de ladite au moins une surface obtenue suite à cette mise en contact;

c) on met en contact le support solide dont au moins une surface a été rendue basique avec une solution, de préférence une solution aqueuse, contenant l'ion $M^{n+}$, puis on lave une ou plusieurs fois à l'eau et on sèche éventuellement le support solide obtenu ;

d) on met en contact le support solide obtenu à l'issue de l'étape c) avec une solution contenant un sel de $[M'(CN)_m]^{z-}$, par exemple un sel de formule $[Alk_z] [M'(CN)_m]$, et un sel d'un métal alcalin Alk, puis on lave une ou plusieurs fois à l'eau, et on sèche éventuellement le support solide ainsi obtenu; de préférence, la solution contenant un sel de $(M'(CN)_m)^{z-}$, par exemple un sel de formule $[Alk_z] [M'(CN)_m]$, et un sel d'un métal alcalin Alk, est une solution aqueuse ;

e) on répète éventuellement les étapes c) à d) ; de préférence, les étapes c) et d) sont répétées de 1 à 10 fois, de préférence encore de 1 à 4 fois ;

f) si les étapes c) et d) sont les étapes ultimes du procédé, alors lors de l'étape c), on lave une ou plusieurs fois à l'eau le support solide obtenu, et lors de l'étape d), on lave une ou plusieurs fois et on sèche le support solide ainsi obtenu.

2.  Procédé selon la revendication 1, dans lequel le matériau a une teneur en nanoparticules de 1% à 20% en masse, de préférence de 10% en masse, par rapport à la masse du support solide.

3.  Procédé selon la revendication 1 ou 2 , dans lequel $M^{n+}$ est $Fe^{2+}$, $Ni^{2+}$, $Fe^{3+}$, $Co^{2+}$, $Cu^{2+}$, ou $Zn^{2+}$ ; M' est $Fe^{2+}$ ou $Fe^{3+}$ ou $Co^{3+}$, et m est 6, ou bien M' est $Mo^{5+}$, et m est 8 ; et Alk est Li, Na ou K, de préférence Alk est K.

4.  Procédé selon l'une quelconque des revendications précédentes, dans lequel $[M'(CN)_m]^{z-}$ est $[Fe(CN)_6]^{3-}$, $[Fe(CN)_6]^{4-}$, $[Co(CN)_6]^{3-}$, ou $[Mo(CN)_8]^{3-}$.

5.  Procédé selon l'une quelconque des revendications précédentes, dans lequel les cations $M^{n+}$ sont des cations $Ni^{2+}$, $Cu^{2+}$, $Fe^{2+}$ ou $Fe^{3+}$ et les anions $[M'(CN)_m]^{z-}$ sont des anions $[Fe(CN)_6]^{3-}$ ou $[Fe(CN)_6]^{4-}$; ou les cations $M^{n+}$ sont des cations $Fe^{3+}$ et les anions $[M'(CN)_m]^{z-}$ sont des anions $[Mo(CN)_8]^{3-}$; ou les cations $M^{n+}$ sont des cations $Co^{2+}$ ou $Ni^{2+}$ et les anions $[M'(CN)_m]^{z-}$ sont des anions $[Co(CN)_6]^{3-}$.

6.  Procédé selon l'une quelconque des revendications précédentes, dans lequel les nanoparticules répondent à la formule $K[Cu^{II}Fe^{III}(CN)_6]$ ou $K_2[Cu^{II}Fe^{II}(CN)_6]$ ou $K[Ni^{II}Fe^{III}(CN)_6]$ ou $K_2[Ni^{II}Fe^{II}(CN)_6]$.

7.  Procédé selon l'une quelconque des revendications précédentes, dans lequel le support inorganique poreux comprend, de préférence est constitué par, un matériau choisi parmi les oxydes de métaux, tels que les oxydes de métaux de transition, comme les oxydes de titane, les oxydes de zirconium par exemple la zircone, les oxydes de niobium, les oxydes de vanadium, les oxydes de chrome, les oxydes de cobalt et les oxydes de molybdène, les oxydes d'aluminium, par exemple l'alumine, les oxydes de gallium, et leurs mélanges ; les oxydes de métalloïdes tels que les oxydes de silicium, par exemple la silice, les oxydes de germanium, les oxydes d'antimoine, et les oxydes d'arsenic, et leurs mélanges; les oxydes mixtes de métaux et/ou de métalloïdes; les aluminosilicates de métaux ; les silicates de métaux tels que les silicates de zirconium, les silicates d'étain, les silicates de cérium, les composés de type mullite et cordiérite, et leurs mélanges; les titanates de métaux tels que la tialite, les titanates de métalloïdes, et leurs mélanges ; les carbures de métaux; les carbures de métalloïdes tels que SiC, et leurs mélanges; les mélanges d'oxydes de métaux et/ou d'oxydes de métalloïdes et/ou d'oxydes mixtes de métaux et/ou de métalloïdes ; les verres comme les verres borosilicatés; les carbones comme les graphites, les fullerènes, et les carbones mésoporeux; et les matériaux composites comprenant deux matériaux ou plus parmi les matériaux précités.

8.  Procédé selon l'une quelconque des revendications précédentes, dans lequel le support se présente sous une forme choisie parmi les particules telles que les granulés, les billes, les fibres, les tubes comme les nanotubes de carbone, les plaques et les plaquettes ; les membranes ; les feutres ; et les monolithes ; de préférence, le support se présente sous la forme d'une poudre constituée par des particules telles que des billes, et a une granulométrie de 0,5 mm à 1 mm.

9. Procédé selon l'une quelconque des revendications précédentes, dans lequel le support a une surface spécifique BET de 5 à 500 m$^2$/g, de préférence de 50 à 500 m$^2$/g, de préférence encore de 100 à 200 m$^2$/g.

10. Procédé selon l'une quelconque des revendications précédentes dans lequel, lors de l'étape b), on met en contact, une ou plusieurs fois, au moins une surface du support solide inorganique poreux avec au moins une solution basique, de préférence au moins une solution aqueuse basique, sous agitation, jusqu'à ce que la valeur du pH de la solution basique en contact avec la surface soit stabilisée, stable, et demeure stable, à une valeur basique supérieure à 7, sous agitation, moyennant quoi on obtient un support solide inorganique poreux dont au moins une surface a été rendue basique, puis on sépare le support solide de la solution basique, et éventuellement on sèche le support solide dont au moins une surface a été rendue basique.

11. Procédé selon l'une quelconque des revendications précédentes, dans lequel les étapes c) et d) sont réalisées en mode statique ou mode batch, ou bien en mode dynamique par exemple dans une même colonne.

**Patentansprüche**

1. Verfahren zur Herstellung eines festen Nanoverbundmaterials, umfassend Nanopartikel aus einem Hexacyanometallat oder Octacyanometallat eines Alkalimetalls und einem Übergangsmetall, entsprechend der Formel $[Alk^+_x]M^{n+}[M'(CN)_m]^{z-}$, wobei Alk ein Alkalimetall ist, x 1 oder 2 ist, M ein Übergangsmetall ist, n 2 oder 3 ist, M' ein Übergangsmetall ist, m 6 oder 8 ist, z 3 oder 4 ist, die an mindestens einer Oberfläche eines porösen anorganischen festen Trägers befestigt sind, wobei die Nanopartikel durch Adsorption an der mindestens einen Oberfläche des porösen anorganischen festen Trägers befestigt sind, wobei die folgenden aufeinanderfolgenden Schritte ausgeführt werden:

a) Ein poröser anorganischer fester Träger wird bereitgestellt;
b) mindestens eine Oberfläche des porösen anorganischen festen Trägers wird basisch gemacht, indem die mindestens eine Oberfläche unter Schütteln mit einer basischen Lösung in Kontakt gebracht wird, bis sich der pH-Wert dieser basischen Lösung in Kontakt mit der mindestens einen Oberfläche stabilisiert und auf einem basischen Wert von mehr als 7 über eine Dauer von 10 Minuten hinweg stabil bleibt; wobei das in-Kontakt-Bringen bei einer Temperatur von 15 °C bis 30 °C ohne Erwärmen und bei atmosphärischem Druck erfolgt, ohne Druck anzulegen; und unter Maßgabe, dass, um zu bestimmen, ob die mindestens eine Oberfläche eine basische Oberfläche ist, die mindestens eine Oberfläche des anorganischen festen Trägers in Kontakt mit einem speziellen farbigen Indikator des basischen pH-Bereichs gebracht wird, und die Farbe der mindestens einen Oberfläche beobachtet wird, die nach diesem in-Kontakt-Bringen erhalten wird;
c) der feste Träger, dessen mindestens eine Oberfläche basisch gemacht worden ist, wird mit einer Lösung, vorzugsweise einer wässrigen Lösung, die das $M^{n+}$ Ion enthält, in Kontakt gebracht, und der erhaltene feste Träger wird danach ein- oder mehrmals mit Wasser gewaschen, und eventuell getrocknet;
d) der am Ende von Schritt c) erhaltene feste Träger wird mit einer Lösung in Kontakt gebracht, die ein Salz von $[M'(CN)_m]^{z-}$, beispielsweise ein Salz der Formel $[Alk_z] [M'(CN)_m]$ und ein Salz eines Alkalimetalls Alk enthält, und der so erhaltene feste Träger wird ein- oder mehrmals mit Wasser gewaschen, und eventuell getrocknet; wobei die Lösung, die ein Salz von $(M'(CN)_m)^{z-}$, beispielsweise ein Salz der Formel $[Alk_z] [M'(CN)_m]$ und ein Salz eines Alkalimetalls Alk enthält, vorzugsweise eine wässrige Lösung ist;
e) die Schritte c) bis d) werden eventuell wiederholt; vorzugsweise werden die Schritte c) und d) 1- bis 10-mal, vorzugsweise noch 1- bis 4-mal wiederholt;
f) falls die Schritte c) und d) die letzten Schritte des Verfahrens sind, wird der erhaltene feste Träger im Schritt c) ein- oder mehrmals mit Wasser gewaschen, und der so erhaltene feste Träger im Schritt d) ein- oder mehrmals gewaschen und getrocknet.

2. Verfahren nach Anspruch 1, wobei das Material einen Gehalt an Nanopartikeln von 1 Ma.-% bis 20 Ma.-%, vorzugsweise von 10 Ma.-% in Bezug auf die Masse des festen Trägers aufweist.

3. Verfahren nach Anspruch 1 oder 2, wobei $M^{n+}$ $Fe^{2+}$, $Ni^{2+}$, $Fe^{3+}$, $Co^{2+}$, $Cu^{2+}$, oder $Zn^{2+}$ ist; M' $Fe^{2+}$ oder $Fe^{3+}$ oder $Co^{3+}$ ist, und m 6 ist, oder aber M' $Mo^{5+}$ ist und m 8 ist; und Alk Li, Na oder K ist, Alk vorzugsweise K ist.

4. Verfahren nach einem der vorstehenden Ansprüche, wobei $[M'(CN)_m]^{z-}$ $[Fe(CN)_6]^{3-}$, $[Fe(CN)_6]^{4-}$, $[Co(CN)_6]^{3-}$, oder

$[Mo(CN)_8]^{3-}$ ist.

5. Verfahren nach einem der vorstehenden Ansprüche, wobei die $M^{n+}$ Kationen $Ni^{2+}$, $Cu^{2+}$, $Fe^{2+}$ oder $Fe^{3+}$ Kationen sind, und die $[M'(CN)_m]^{z-}$ Anionen $[Fe(CN)_6]^{3-}$, $[Fe(CN)_6]^{4-}$ Anionen sind; oder die $M^{n+}$ Kationen $Fe^{3+}$ Kationen sind, und die $[M'(CN)_m]^{z-}$ Anionen $[Mo(CN)_8]^{3-}$ Anionen sind; oder die $M^{n+}$ Kationen $Co^{2+}$ oder $Ni^{2+}$ Kationen sind, und die $[M'(CN)_m]^{z-}$ Anionen $[Co(CN)_6]^{3-}$ Anionen sind.

6. Verfahren nach einem der vorstehenden Ansprüche, wobei die Nanopartikel der Formel $K[Cu^{II}Fe^{II}(CN)_6]$ oder $K_2[Cu^{II}Fe^{II}(CN)_6]$ oder $K[Ni^{II}Fe^{III}(CN)_6]$ oder $K_2[Ni^{II}Fe^{II}(CN)_6]$ entspricht.

7. Verfahren nach einem der vorstehenden Ansprüche, wobei der poröse anorganische Träger ein Material umfasst, vorzugsweise daraus besteht, das aus Metalloxiden, wie Übergangsmetalloxiden, die Titanoxiden, Zirkoniumoxiden, beispielsweise Zirkon, Niobiumoxiden, Vanadiumoxiden, Chromoxiden, Kobaltoxiden und Molybdänoxiden, Aluminiumoxiden, beispielsweise Aluminiumoxid, Galliumoxiden und deren Gemischen; Halbmetalloxiden, wie Siliziumoxiden, beispielsweise Kieselsäure, Germaniumoxiden, Antimonoxiden, Arsenoxiden und deren Gemischen; gemischten Metall- und/oder Halbmetalloxiden; Metall-Alumosilikaten; Metallsilikaten, wie Zirkoniumsilikaten, Zinnsilikaten, Cer-Silikaten, Zusammensetzungen in der Art von Mullit und Cordierit, und deren Gemischen; Metalltitanaten, wie Tialit, Halbmetalltitanaten, und deren Gemischen; SiC, und deren Gemischen; Gemischen aus Metalloxiden und/oder Halbmetalloxiden und/oder gemischten Metall- und/oder Halbmetalloxiden; Gläsern wie Borosilikatgläsern; Kohlenstoffen, wie Graphiten, Fullerenen, und mesoporösen Kohlenstoffen; und den Verbundmaterialien, umfassend zwei Materialien oder mehr aus den zuvor genannten Materialien ausgewählt wird.

8. Verfahren nach einem der vorstehenden Ansprüche, wobei sich der Träger in einer Form darstellt, die aus den Partikeln wie den Granulaten, Kugeln, Fasern, Röhrchen, wie Nanokohlenstoffröhrchen, Platten und Plättchen; Membranen; Filzen; und Monolithen ausgewählt wird, wobei sich der Träger vorzugsweise in Form eines Pulvers darstellt, das aus Partikeln, wie Kugeln gebildet wird, und eine Korngröße von 0,5 mm bis 1 mm aufweist.

9. Verfahren nach einem der vorstehenden Ansprüche, wobei der Träger eine spezielle BET-Oberfläche von 5 bis 500 $m^2/g$, vorzugsweise von 50 bis 500 $m^2/g$, vorzugsweise noch von 100 bis 200 $m^2/g$ aufweist.

10. Verfahren nach einem der vorstehenden Ansprüche, wobei im Schritt b) mindestens eine Oberfläche des porösen anorganischen festen Trägers ein- oder mehrmals mit mindestens einer basischen Lösung, vorzugsweise mindestens einer wässrigen basischen Lösung unter Schütteln in Kontakt gebracht wird, bis sich der pH-Wert der basischen Lösung in Kontakt mit der Oberfläche unter Schütteln stabilisiert, stabil ist, auf einem basischen Wert von mehr als 7 und stabil bleibt, wodurch ein poröser, anorganischer fester Träger erhalten wird, dessen mindestens eine Oberfläche basisch gemacht worden ist, der feste Träger danach von der basischen Lösung getrennt wird, und der feste Träger, dessen mindestens eine Oberfläche basisch gemacht worden ist, eventuell getrocknet wird.

11. Verfahren nach einem der vorstehenden Ansprüche, wobei die Schritte c) und d) im statischen Modus oder Batch-Modus, oder aber im dynamischen Modus, beispielsweise in einer selben Säule ausgeführt werden.

**Claims**

1. A method for preparing a nanocomposite solid material comprising nanoparticles of a hexacyanometallate or octocyanometallate of an alkali metal and of a transition metal, having the formula $[Alk^+_x]M^{n+}[M'(CN)_m]^{z-}$ where Alk is an alkali metal, x is 1 or 2, M is a transition metal, n is 2 or 3, M' is a transition metal, m is 6 or 8, z is 3 or 4, attached to at least one surface of a porous inorganic solid support, wherein the nanoparticles are attached by adsorption to said at least one surface of the porous inorganic solid support, comprising the following successive steps:

   a) a porous inorganic solid support is provided;
   b) at least one surface of the porous inorganic solid support is made basic by contacting said at least one surface with a basic solution, under stirring, until the pH of this basic solution in contact with said at least one surface is stabilised, and remains stable, at a basic value, greater than 7, for a duration of 10 minutes; contacting being performed at a temperature of 15°C to 30°C, without heating, and at atmospheric pressure, without applying pressure, and it being understood that, to determine whether said at least one surface is a basic surface, said at least one surface of the inorganic solid support is contacted with a colour indicator specific to the basic pH range and then the colour of said at least one surface obtained following this contacting is observed;

c) the solid support at least one surface of which has been made basic is contacted with a solution, preferably an aqueous solution, containing the $M^{n+}$ ion, and then the solid support obtained is washed once or several times with water and then optionally dried;

d) the solid support obtained at the end of step c) is contacted with a solution containing a $[M'(CN)_m]^{z-}$ salt, for example a salt of the formula $[Alk_z]$ $[M'(CN)_m]$, and a salt of an alkali metal Alk, and then the solid support thus obtained is washed once or several times with water, and then optionally dried; preferably, the solution comprising a $[M'(CN)_m]^{z-}$ salt, for example a salt of the formula $[Alk_z]$ $[M'(CN)_m]$, and a salt of an alkali metal Alk, is an aqueous solution;

e) steps c) to d) are optionally repeated; preferably steps c) and d) are repeated from 1 to 10 times, still preferably from 1 to 4 times;

f) if steps c) and d) are the last steps of the method, then during step c), the solid support obtained is washed once or several times with water, and during step d), the solid support thus obtained is washed once or several times and then dried.

2. The method according to claim 1, wherein the material has a nanoparticle content of 1% to 20% by mass, preferably 10% by mass, based on the mass of the solid support.

3. The method according to claim 1 or 2, wherein $M^{n+}$ is $Fe^{2+}$, $Ni^{2+}$, $Fe^{3+}$, $Co^{2+}$, $Cu^{2+}$, or $Zn^{2+}$; M' is $Fe^{2+}$ or $Fe^{3+}$ or $Co^{3+}$, and m is 6, or M' is $Mo^{5+}$, and m is 8; and Alk is Li, Na or K, preferably Alk is K.

4. The method according to any of the preceding claims, wherein $[M'(CN)_m]^{z-}$ is $[Fe(CN)_6]^{3-}$, $[Fe(CN)_6]^{4-}$, $[Co(CN)_6]^{3-}$, or $[Mo(CN)_8]^{3-}$.

5. The method according to any of the preceding claims, wherein the $M^{n+}$ cations are $Ni^{2+}$, $Cu^{2+}$, $Fe^{2+}$ or $Fe^{3+}$ cations and the $[M'(CN)_m]^{z-}$ anions are $[Fe(CN)_6]^{3-}$ or $[Fe(CN)_6]^{4-}$ anions; or the $M^{n+}$ cations are $Fe^{3+}$ cations and the $[M'(CN)_m]^{z-}$ anions are $[Mo(CN)_8]^{3-}$ anions; or the $M^{n+}$ cations are $Co^{2+}$ or $Ni^{2+}$ cations and the $[M'(CN)_m]^{z-}$ anions are $[Co(CN)_6]^{3-}$ anions.

6. The method according to any of the preceding claims, wherein the nanoparticles have the formula $K[Cu^{II}Fe^{III}(CN)_6]$ or $K_2[Cu^{II}Fe^{II}(CN)_6]$ or $K[Ni^{II}Fe^{III}(CN)_6]$ or $K_2[Ni^{II}Fe^{II}(CN)_6]$.

7. The method according to any of the preceding claims, wherein the porous inorganic support comprises, preferably consists of, a material selected from metal oxides, such as transition metal oxides, like titanium oxides, zirconium oxides for example zirconia, niobium oxides, vanadium oxides, chromium oxides, cobalt oxides and molybdenum oxides, aluminium oxides, for example alumina, gallium oxides, and mixtures thereof; metalloid oxides such as silicon oxides, for example silica, germanium oxides, antimony oxides, and arsenic oxides, and mixtures thereof; metal and/or metalloid mixed oxides; metal aluminosilicates; metal silicates; such as zirconium silicates, tin silicates, cerium silicates, mullite and cordierite type compounds, and mixtures thereof; metal titanates such as tialite, metalloid titanates, and mixtures thereof; metal carbides; metalloid carbides such as SiC, and mixtures thereof; mixtures of metal oxides and/or metalloid oxides and/or metal and/or metalloid mixed oxides; glasses such as borosilicate glasses; carbons such as graphites, fullerenes, and mesoporous carbons; and composite materials comprising two or more materials from the abovementioned materials.

8. The method according to any of the preceding claims, wherein the support is in a form selected from particles such as pellets, beads, fibres, tubes such as carbon nanotubes, plates and platelets, membranes; felts, and monoliths; preferably, the support is in the form of a powder consisting of particles such as beads, and has a particle size of 0.5 mm to 1 mm.

9. The method according to any of the preceding claims, wherein the support has a specific surface area BET of from 5 to 500 $m^2/g$, preferably from 50 to 500 $m^2/g$, still preferably from 100 to 200 $m^2/g$.

10. The method according to any of the preceding claims, wherein, during step b), at least one surface of the porous inorganic solid support is contacted, once or several times with at least one basic solution, preferably at least one basic aqueous solution, under stirring, until the value of the pH of the basic solution in contact with the surface is stabilised, stable, and remains stable, at a basic value greater than 7, under stirring, whereby a porous inorganic solid support at least one surface of which has been made basic is obtained, and then the solid support is separated from the basic solution, and optionally the solid support at least one surface of which has been made basic is dried.

11. The method according to any of the preceding claims, wherein steps c) and d) are performed in static mode or batch mode, or dynamic mode for example in a same column.

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010133689 A2
- WO 2010133689 A1
- WO 2016038206 A1

**Littérature non-brevet citée dans la description**

- **H. MIMURA ; M. KIMURA ; K. AKIBA ; Y. ONODERA.** Sélective removal of césium from highly concentrated sodium nitrate neutral solutions by potassium nickel hexacyanoferrate(II)-loaded silica gels. *solvent extraction and ion exchange,* 1999, vol. 17 (2), 403-417
- **L. SHARIGYN ; A. MUROMSKIY ; M. KALYAGINA ; S. BOROVKOV.** A granular inorganic cation-exchanger sélective to césium. *J. Nuclear Science and Technology,* 2007, vol. 44 (5), 767-773
- **SANHITA CHAUDHURY ; A.K. PANDEY ; A. GOSWAMI.** Copperferrocyanide loaded track etched membrane on effective césium absorbent. *J. Radioanal. Nucl. Chem,* 2015, vol. 204, 697-703
- **KAZEMIAN H. et al.** Cs and Sr removal from solution using potassium nickel hexacynaoferrate impregnated zeolites. *Journal of Radioanalytical and Nuclear Chemistry,* Mai 2006, vol. 268 (2), 231-236